# EUROPEAN PATENT SPECIFICATION

(11) **EP 4 512 490 B1**
(45) Date of publication and mention of the grant of the patent: **14.10.2026**
(21) Application number: 25150579.8
(22) Date of filing: 03.06.2019
(51) Int. Cl.: A63B 22/18, A63B 21/02, A63B 21/045, A63B 23/035, A63B 23/04, A63B 23/08

(54) **EXERCISE DEVICE**
ÜBUNGSGERÄT
DISPOSITIF D'EXERCICE

(30) Priority: 10.06.2018 US 201862682959 P; 16.12.2018 US 201816221535; 16.12.2018 WO PCT/US2018/065896; 02.06.2019 US 201916429020
(43) Date of publication of application: 26.02.2025
(62) Document number(s) of the earlier application(s) in accordance with Art. 76 EPC: 19820346.5 / 3 801 785
(73) Proprietor: Gouzenko, Alexander, Fort Lee, NJ 07024 (US)
(72) Inventor: Gouzenko, Alexander, Fort Lee, NJ 07024 (US)
(74) Representative: K2 IP Limited

(56) References cited:
- US-A- 4 953 858
- US-A- 5 399 140
- US-A1- 2007 027 009
- US-A1- 2008 280 741
- US-A1- 2013 035 617
- US-A1- 2013 316 827

## Description

### RELATED APPLICATIONS

This application is a divisional application of European patent application number 19820346.5 (publication number WO 2019/240974 A1).

### FIELD OF THE INVENTION

This invention relates to a multipurpose exercise device used to simulate the movements and motions of athletes in sports, for example, skiers, snowboarders, skateboarders, surfers, kite boarders, water skiers, wake-boarders. The exercise device may be used in training by motion sports athletes and by other recreational athletes. It can also be used in medicine and physical therapy and may be coupled or integrated into a CPU (Computer Processing Unit), computer, game console, Virtual Reality glasses, tablets, and/or video monitor to allow for an interactive experience.

### BACKGROUND OF THE INVENTION

US 5 399 140 discloses a balancing device having a platform that is pivotable about a vertical axis. US 5 399 140 does not disclose at least a linkage system for guiding and controlling a pivot angle of the platform. US2013/316827A1 discloses a multipurpose exercise device according to the preamble of claim 1.

### SUMMARY OF THE INVENTION

The exercise device of this invention is a multipurpose exercise device as defined in claim 1, used to replicate the movements and motions of athletes in several sports. The exercise device may be used in training, physical therapy and medicine. A broad segment of the population can use the device for many purposes. For example, the device users can utilize it to improve their general level of fitness, physical health and balance, and to exercise major groups of muscles, e.g., abs, lateral abdominal muscles, "quads" (quadriceps), "glutes" (gluteal muscles) and calves.

The exercise device of this invention is particularly useful for "motion sport" athletes, such as skiers, snowboarders, skateboarders, surfers, kite boarders, water skiers, wake boarders, etc. The exercise device can help them to improve balance, retain or enhance strength and improve muscles that are utilized in the sports.

The exercise device of this invention is also useful, under a medical practitioner's guidance, for improving balance, muscle and joint strength, treating joint and muscle impairments, increasing joint and muscle mobility and function, and treating certain medical and neurological disorders, such as vertigo, dizziness, Parkinson's disease, multiple sclerosis, stroke recovery, etc.

Additionally, the exercise device of this invention may be coupled with or integrated with a video or internet game for dual purpose of playing the game and at the same time engaging in exercises to improve the individual's level of fitness.

Broadly, the exercise device of this invention includes a stable base that rests on a substantially horizontal support surface, e.g., floor, lawn, etc. A support post is mounted to the top of the base and a user platform is mounted to the top of the support post. The exercise device of this invention uses a synergistic balance of resistance elements (e.g., dampers, pistons, elastic bands, springs, or other types of resistance as further described herein) and pivot points to create a smooth, realistic simulation of the real world movements in specific sports activities. The user's body is positioned on the user platform and the location and action of the user's feet and body determine the motions of the user platform to provide the desired exercise movements.

More specifically, the exercise device of this invention comprises a base having an upper surface and lower surface, the lower surface resting on a substantially horizontal support surface. A user platform is provided having a lower surface and an upper surface upon which the user stands. A support post, which may be T-shaped, is also provided and consists of an upper cross bar section with vertical pivots and a vertical column section below the cross bar section. The support post is mounted to the base and the vertical column section or cross bar section axially pivots on the base. The lower surface, sides or other parts of the user platform are mounted to vertical pivots in the cross bar section of the support post. The user platform thus pivots with the support post in a horizontal plane parallel to the horizontal support surface. Additionally, the user platform pivots on the support post in a vertical plane perpendicular to the horizontal support surface. A plurality of resistance elements having a first end and a second end are provided. The first end is mounted to the support post or user platform and the second end is mounted to the base to control the resistance, velocity and angle of pivot of the user platform in the horizontal plane. At least one of the resistance elements is adjustable to further control the resistance, velocity and angle of pivot of the user platform in the horizontal plane. Optionally, at least one dampening element is provided having a first end and a second end, the first end is mounted to the support post or user platform and the second end is mounted to the base to control the resistance, velocity and angle of pivot of the user platform in the horizontal plane. Optionally, a plurality of resistance elements having a first end and a second end are provided with the first end mounted to the base or support post and the second end mounted to the user platform to control the resistance, velocity and angle of pivot of the user platform in the vertical plane. Optionally, at least one of the resistance elements is adjustable to further control the resistance, velocity and angle of pivot of the user platform in the vertical plane. In use, the user stands on the upper surface of the user platform and performs exercise motions to propel the user platform to pivot in the horizontal plane and the vertical plane.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

Further aspects, features and advantages of the present invention will become even more apparent with reference to the following detailed description and the accompanying drawings.

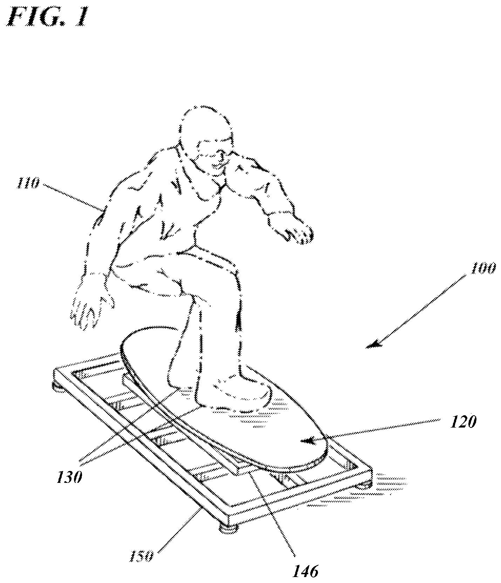

**Fig. 1** is a perspective schematic representation of the exercise device **100** of the present invention showing a user **110** positioned on a user board **120,** that is mounted on top of a user platform **146** which in turn is mounted to a base **150** that rests on a substantially horizontal support surface.

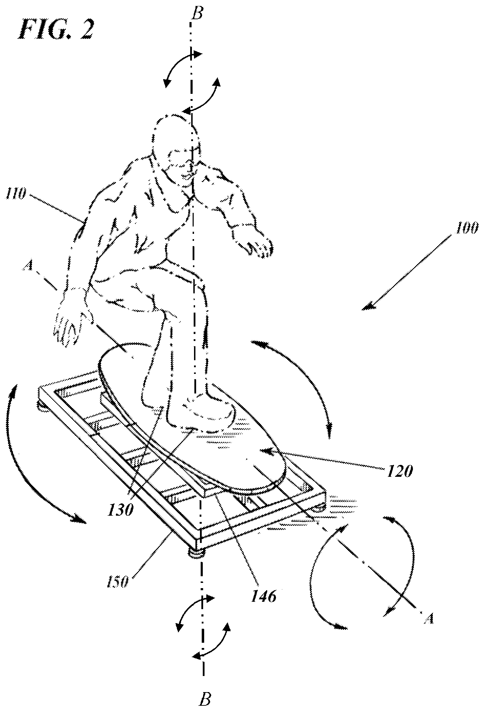

**Fig. 2** is a view similar to **Fig. 1** wherein the range of movements and articulation of the exercise device **100** have been added, i.e. vertical pivot around the horizontal axis **A-A** and horizontal pivot around the vertical axis **B-B.**

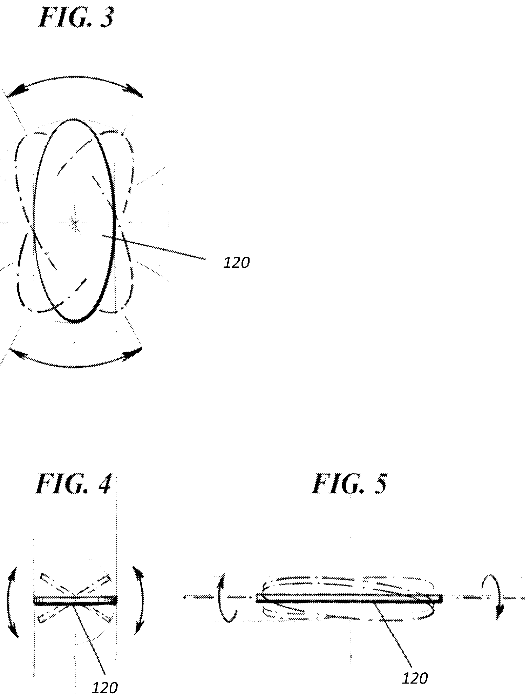

**Fig. 3** is a top plan view of the user board **120** shown in **Fig. 2** showing the range of pivot movements of the user board **120** in the horizontal plane around the vertical axis **B-B** shown in **Fig. 2****.** The user platform **146** (not shown) under the user board **120** conforms to or follows the movements of the user board **120.**
**Fig. 4** is an end view of the user board **120** shown in **Fig. 2** showing the range of pivot movements of the user board **120** in the vertical plane around the horizontal axis **A-A** shown in **Fig. 2****.** The user platform **146** (not shown) under the user board **120** conforms to or follows the movements of the user board **120.**
**Fig. 5** is a side view of the user board **120** shown in **Fig. 2** showing the range of movements of the user board **120** in the vertical plane around the horizontal axis **A-A** shown in **Fig. 2****.** The user platform **146** (not shown) under the user board **120** conforms to or follows the movements of the user board **120.**

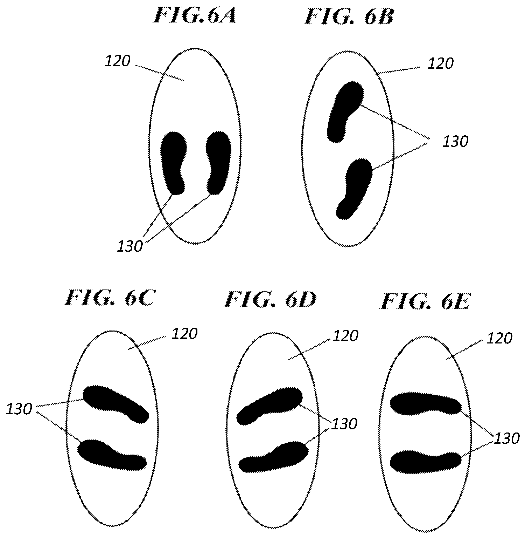

**Figs. 6A** through **6E** are schematic top views of the user board **120** depicting a variety of possible foot placement positions **130** on the user board **120** that drive the vertical and horizontal pivot motions of the user board **120** and user platform **146.** Foot mounts (not shown) can be mounted directly on the user board **120** or on the user platform **146** if the user board **120** is not used.

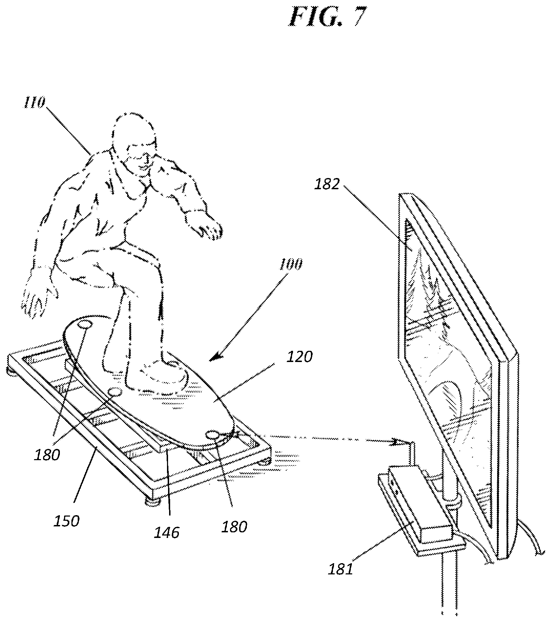

**Fig. 7** is a perspective view showing an embodiment of the exercise device **100** of this invention wherein the exercise device **100** communicates through sensors **180** integrated into the device **100** (e.g., the user board, user platform or both) to transmit (wired or wireless) the motion, velocity, acceleration of motion and/or position of the user board **120** and/or the user platform **146** to a CPU (Computer Processing Unit), game console, tablet, Virtual Reality glasses, computer 181 and/or video monitor **182** to allow for an interactive experience that may include data compilation on the exercise motions.

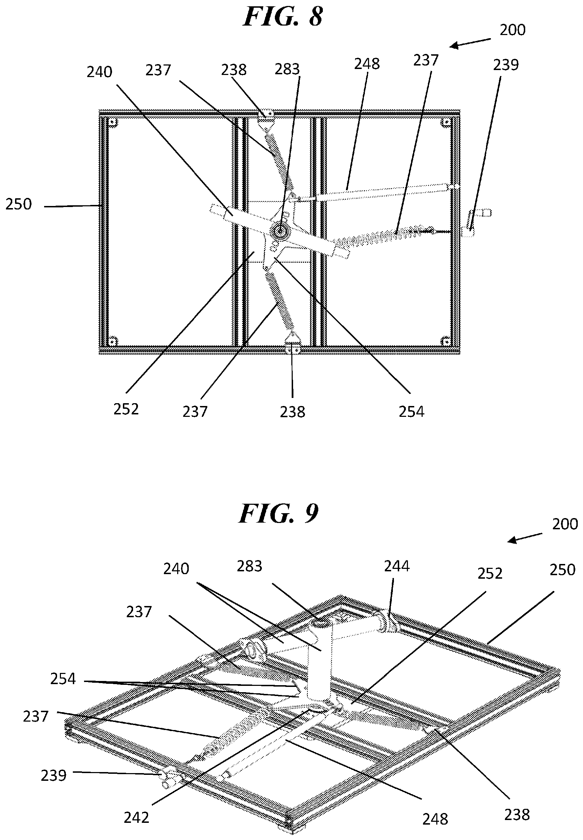

**Figs 8** through **16** illustrate an embodiment of the exercise device **200** of this invention that incorporates the use of the dampening piston strut **248** and a plurality of vertical resistance springs **221** and horizontal resistance springs **237** (or other types of resistance elements as further described herein) to enable control of resistance around the horizontal and vertical pivots of the user platform **246** about the support post **240** that supports and mounts the user platform **246** to the base **250.** This embodiment does not include any guiding mechanism to control the angle of vertical pivot or tilt of the user-platform **246** around the horizontal axis **A-A.**

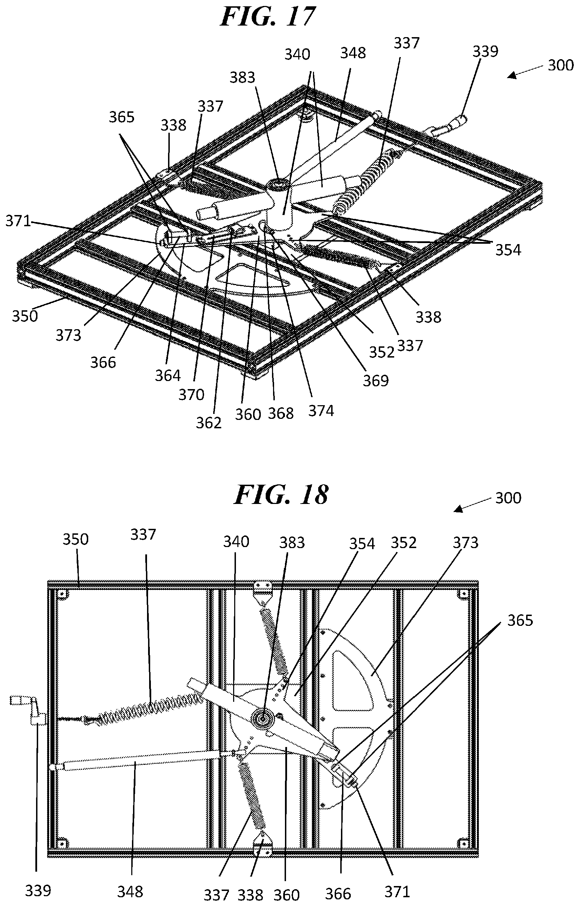

**Figs 17** through **30** illustrate an embodiment of the exercise device **300** of this invention, which includes the same components as embodiment **200,** except the exercise device does not include vertical resistance elements **221** to control the resistance to vertical pivot or tilt of the user platform **346** about the support post **340** and around the horizontal axis **A-A.** Additionally, this embodiment includes a linkage mechanism to control the angle of vertical pivot or tilt of the user-platform **346** around the horizontal axis **A-A.**

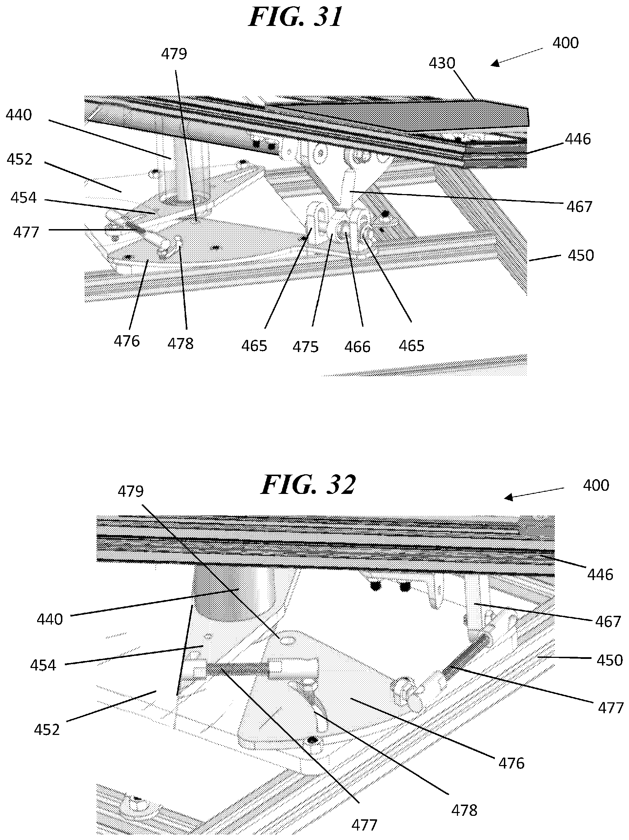

Figs. **31-34** show several embodiments of the exercise device of this invention **400** illustrating various alternative adjustable linkage mechanisms to control the angle of the vertical tilt or pivot of the user-platform **446** around the horizontal axis **A-A** (i.e., to control the angle of pivot of the user platform **446** in the vertical plane).

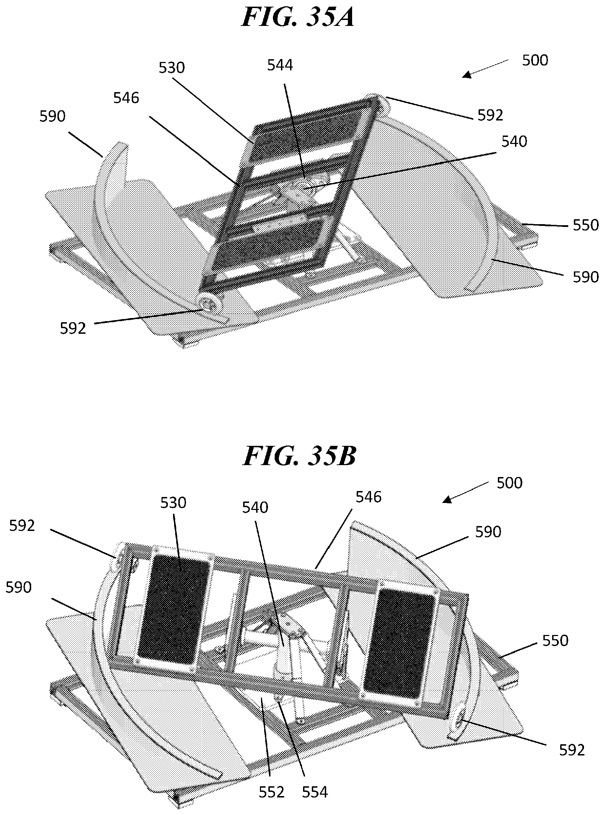

Figs **35-38** are images illustrating an embodiment of the exercise device of this invention **500** whereby the vertical tilt or pivot of the user-platform **546** around the horizontal **A-A** axis (i.e., angle of pivot of the platform **546** in the vertical plane) is controlled by adjustable or removable arced set of ramps, rails or tracks **590** and mating rollers (bearing wheels) **592.**

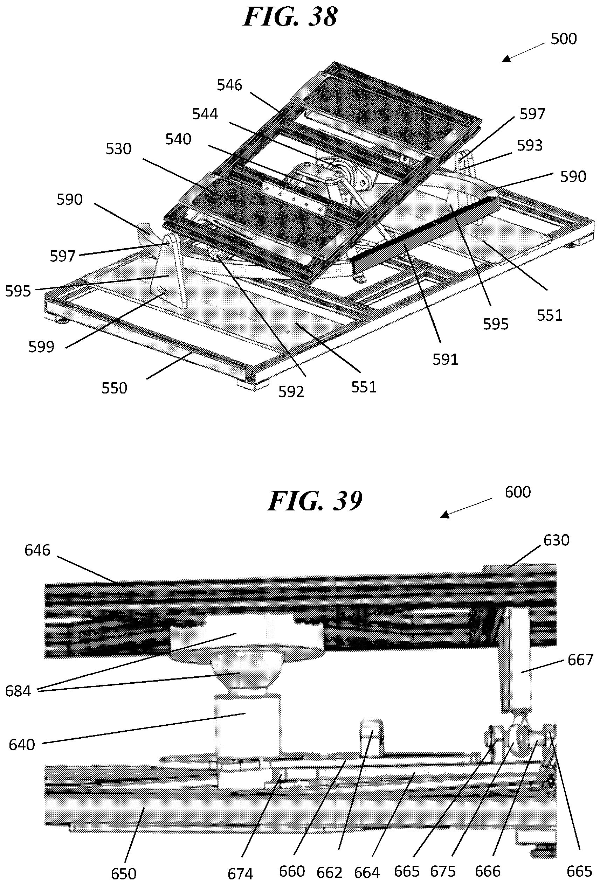

**Figs. 39-40** illustrate the exercise device of this invention **600** with alternative designs of the support post **640.** The support post **640** is connected to a spherical bearing/ball joint **684** that provides interface between the support post **640** and the user platform **646.** The spherical bearing/ball joint **684** allows the user platform **646** to rotate with a complete degree of freedom in any direction, including up, down, left or right. However, any ramps, rails or linkage mechanisms described herein would limit the degree of freedom of rotation of the user platform **646.** The support post with a spherical bearing / ball joint can be incorporated in any embodiment of this invention from **100** through to **500** described herein.

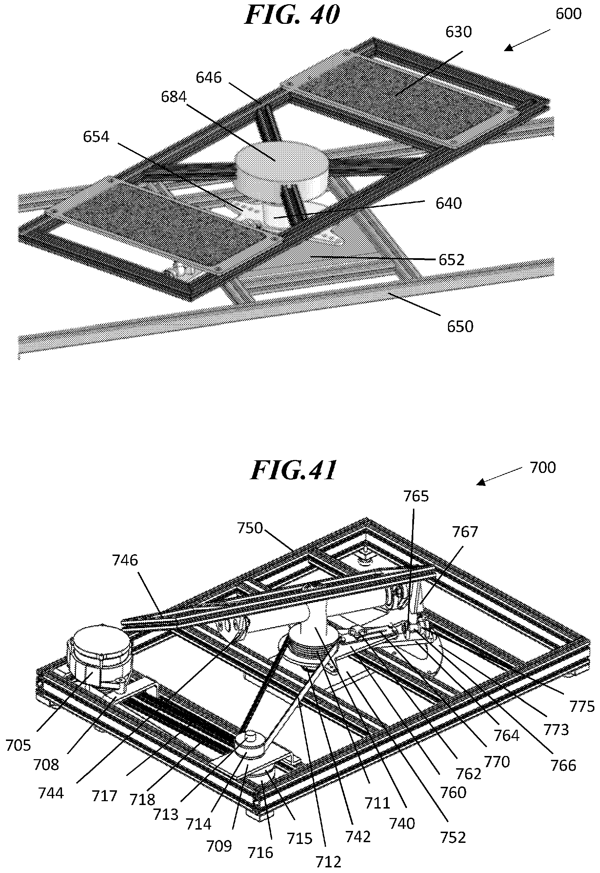

**Figs 41** through **43** illustrate an embodiment of the exercise device **700** of this invention, which includes electronic alternator-based system of horizontal resistance of the user platform **746.** This alternator-based resistance system can be incorporated in any embodiment of this invention from **100** through to **600** described herein.

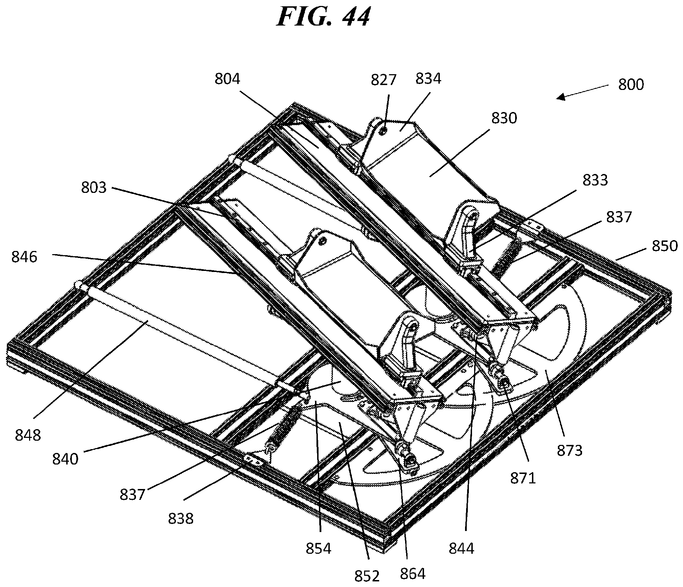

**Figs 44** through **48** illustrates another embodiment of the exercise device **800** of this invention that represents any pair of the previously described exercise devices 100 through 700 mounted on a common mounting base. A user can place one foot on the user platform of one device and the other foot on the user platform of the other device and operate the devices independently of other.

The drawings are not presented to scale but are only used to illustrate the principles of the invention. In the drawings, like reference numbers indicate like elements.

### DETAILED DESCRIPTION OF THE INVENTION

### Figures 1-7 Schematic

The broad concept and principles of the exercise device of the present invention can be seen schematically in **Figs. 1** through **7****.** The exercise device **100** is a multipurpose exercise device for replicating exercise motions for a user for a plurality of sports and physical therapy. Referring to **Figs. 1** and **2****,** the exercise device **100** includes a base **150** that rests on a surface, e.g., floor, lawn, etc. The exercise device has a user platform **146** that is mounted to the top of the base **150.** The user platform **146** has a lower surface and an upper surface. The lower surface of the user platform **146** is mounted to the upper surface of the base by a support post (not shown). The support post permits the user platform to pivot around the support post in a horizontal plane (i.e. parallel to the horizontal support surface the base **150** rests upon) and vertical plane (i.e. perpendicular to the horizontal support surface). A user board **120** (as shown in **Figs 1-7****),** ski module or snowboard module (as further described herein) can be mounted on top of the user platform **146.** The user platform **146,** user board **120,** snowboard module and ski module can be designed in various shapes and forms (e.g. in the shape of a snowboard, wakeboard, etc.) to simulate a variety of sports, e.g., snow-sports, water-sports, land-based sports. In use, the user stands on top of the user platform, for example on foot mounts **130** that may be mounted directly on the user board **120** or on the user platform **146.** The foot mounts **130** can also take different shapes or forms and can be simple footplates or placeholders made from materials that prevent slippage, or they can be mounts for ski-boots, snow-board boots and water ski foot inserts.

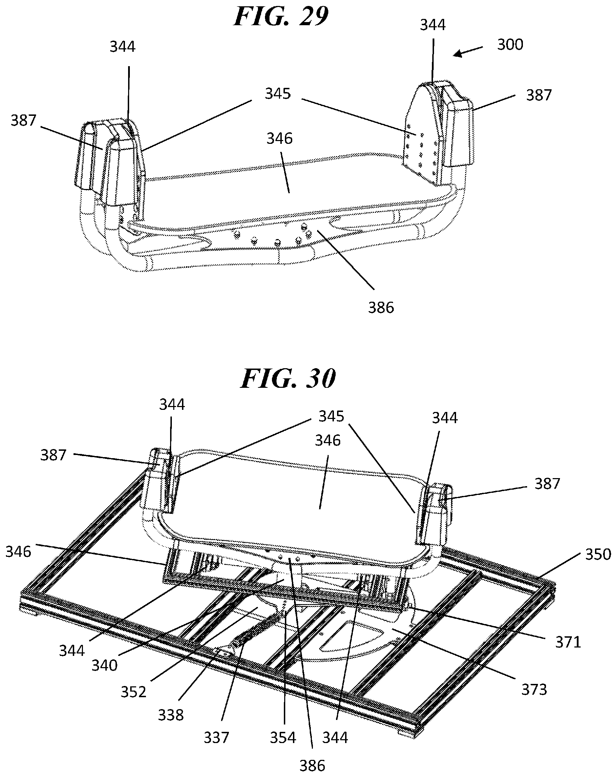

It should be understood that the use of the term *user board* and *user platform* in describing **Figs 1-7** are used to emphasize the fact that this invention contemplates the use of one or a of plurality of platforms that can be mounted on top of the support post and/or on top of each other. These platforms may contain electronic and digital components therein (or thereon) for use with the exercise device, there may be an additional user platform that is designed for cushioning or structural support or that provides another degree of horizontal (or even vertical) pivoting to the exercise device (see e.g. **Figs 29-30****).** This invention does not exclude these possibilities for multiple platforms. However, for the sake of brevity this application uses the term *user platform* most of the time to discuss the relationship of the platform(s) with the remaining elements of the exercise device **100.**

The user's 110 body positions on the user board **120** and the location and action of the user's feet on foot mounts **130** and body motion determine the motions and coaction, and propel the user platform **146,** user board **120** and the support post (not shown) to provide the desired exercise motions. The user platform **146,** user board **120** and the support post (not shown) co-act with each other to provide the vertical pivoting around the horizontal axis **A-A** and pivoting in horizontal plane around the vertical axis **B-B** to provide the appropriate motions (as shown on **Fig.2****).**

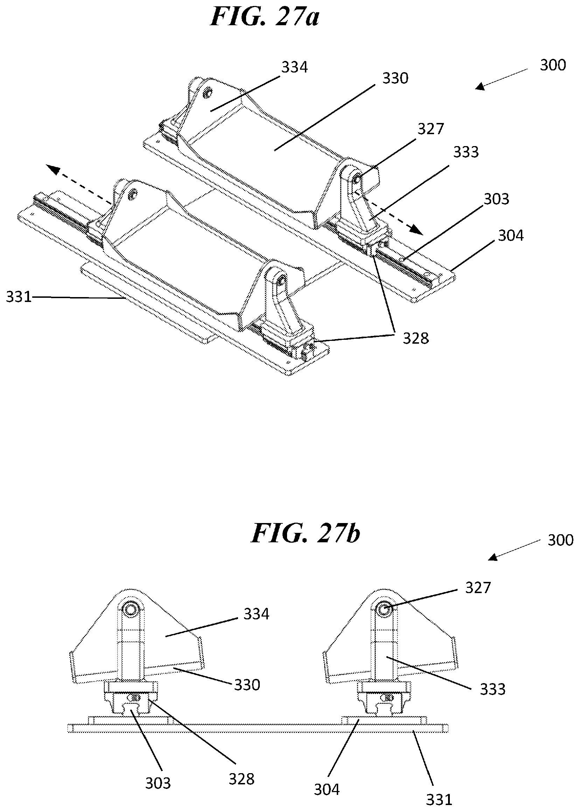

Referring to **Figs. 1-7****,** the user **110** may stand sideways on upper surface of the user board **120,** user platform **146** or a snowboard module, i.e., with shoulders parallel to horizontal axis **A-A** (as shown on **Figs. 6B-6E****).** An embodiment of a snowboard module is described in detail in **Figs. 29-30** herein. Alternatively, the user **110** may stand on top of the user board **120,** user platform **146,** or a ski module facing forward, i.e., with shoulders perpendicular to the horizontal axis **A-A** (as shown on **Figs. 6A****).** An embodiment of a ski module is described in detail in **Figs. 27-28** herein. The body and feet positions can be varied to propel the platforms and emulate the movements encountered during different types of sporting activities.

**Fig. 2** schematically illustrates the range of motions that can be produced by the exercise device **100** of this invention. The horizontal axis of user platform **146** and user board **120** is represented by **A-A** and the vertical axis is represented by **B-B.** The vertical tilt or pivot of the user platform **146** and user board **120** around the horizontal axis **A-A** in the vertical plane and horizontal pivot of the user platform **146** and user board **120** in the horizontal plane around the vertical axis **B-B** are affected by the user's body **110** and foot positions and motions on foot mounts **130.** This combination of pivoting in the vertical plane around the horizontal axis **A-A** and pivoting in the horizontal plane around the vertical axis **B-B** can simulate "edging" produced by snowboarders, skiers and other motion sport participants. The horizontal axis **A-A** and vertical axis **B-B** are referenced throughout the descriptions of the exercise devices described herein, although they are not shown on the subsequent drawings.

Figs. **3** through **5** are schematic views showing the various movements possible by the user platform **146** and user board **120** of the exercise device of this invention. **Fig. 3** is a top plane view of the user platform **146** and user board **120** showing the range of movements of the user platform **146** and user board **120** in the horizontal plane around the vertical axis **B-B.** **Fig. 4** is an end view of the user platform **146** and user board **120** showing the range of vertical tilt or pivot movements of the user platform **146** and user board **120** in the vertical plane around the horizontal axis **A-A.** **Fig. 5** is a side view of the user platform **146** and user board **120** shown in **Fig. 2** demonstrating the range of vertical tilt or pivot movements of the user platform **146** and user board **120** in the vertical plane around the horizontal axis **A-A.**

**Figs. 6A** through **6E** show a variety of the infinite foot positions on foot mounts **130** mounted on user platform **146** or user board **120.** The overall concept of the present invention provides a means for user **110** to select foot positions on the user platform **146** and user board **120** in a number of ways to emulate various sports activities or to utilize the device for training purposes, teaching, rehabilitation, entertainment or competition.

Referring to **Fig. 7****,** the exercise device of this invention **100** may be linked to a video monitor **182** through a wireless or wired connection. User **110** is positioned on the user platform **146** and user board **120.** The movements of a user, the user platform **146** and/or of user board **120** are tracked by motion sensors, potentiometers, accelerometers, strain gauges or other electronic instruments **180** positioned on or under the user platform **146** and user board **120,** on or inside the support post (not shown), on foot mounts **130** and on any other part of the exercise device **100** and/or on the user **110** (not shown). Sensors **180** extrapolate the user's movements and relay them to a central processing unit (CPU), game console, tablet, Virtual Reality glasses, computer **181** and/or viewing monitor **182.** The means for connectivity are numerous and can be, for example, Bluetooth^{®}, Wi-Fi, and hard wired. The user **110** can also engage in online gaming in order to compete with other users, e.g., ski races, slalom races, etc. More detailed descriptions of the gaming capabilities are discussed below.

The exercise device **100** and sensors **180** can be coupled with a computer program, application ("App"), etc. to monitor activity and physical condition, e.g., calories, heartbeat, miles, time, etc. Other benefits could be realized in the form of detailed rehabilitation charts showing the physical progress of a user that is coming back from an injury.

As discussed in more detail herein, a plurality of adjustable resistance elements are mounted to the support post to control the level of resistance, velocity and angle of pivot of the user platform **146** and user board **120** in the horizontal plane around the vertical axis **B-B.** The exercise device may also include a plurality of adjustable resistance elements mounted to the user platform **146** and user board **120** to control the level of resistance, velocity and angle of pivot of the user platform **146** and user board **120** in the vertical plane around the horizontal axis **A-A.** Such adjustable resistance elements mounted to the user platform **146** or the user board **120** may include a guiding tilt mechanism that guides and controls the tilt of the user platform **146** and user board **120.** The guiding tilt mechanism can be in the form of a linkage system or guiding rails, tracks or ramps to, for example, emulate skiing or snowboarding exercise motions.

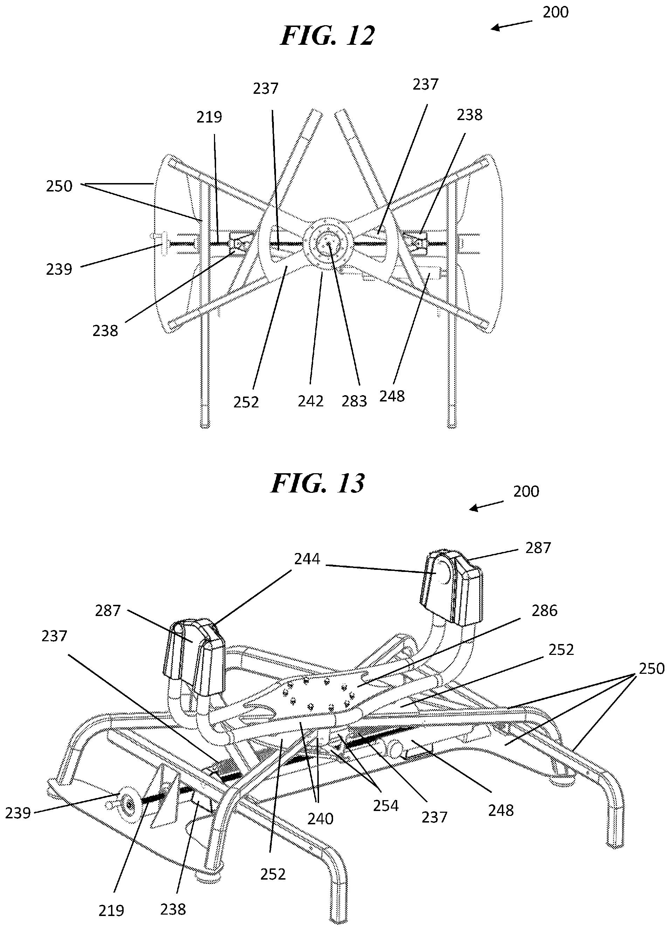

**Figs. 8** through **16** depict an embodiment of the exercise device **200** of this invention without the guiding tilt mechanism that controls the angle of vertical pivot or tilt of the user platform **246** (as shown in other embodiments herein). In this embodiment, the support post **240** can be mounted either by affixing the vertical column section to the support mount **252** (as described in **Figs. 8-11b**) or by affixing its horizontal cross bar section to the support mount **252** (as described in **Figs. 12-16****).** Neither of such variations includes any guiding tilt mechanism. In both instances the principle movements are the same as described above with respect to the exercise device **100.**

### Figures 8-11b

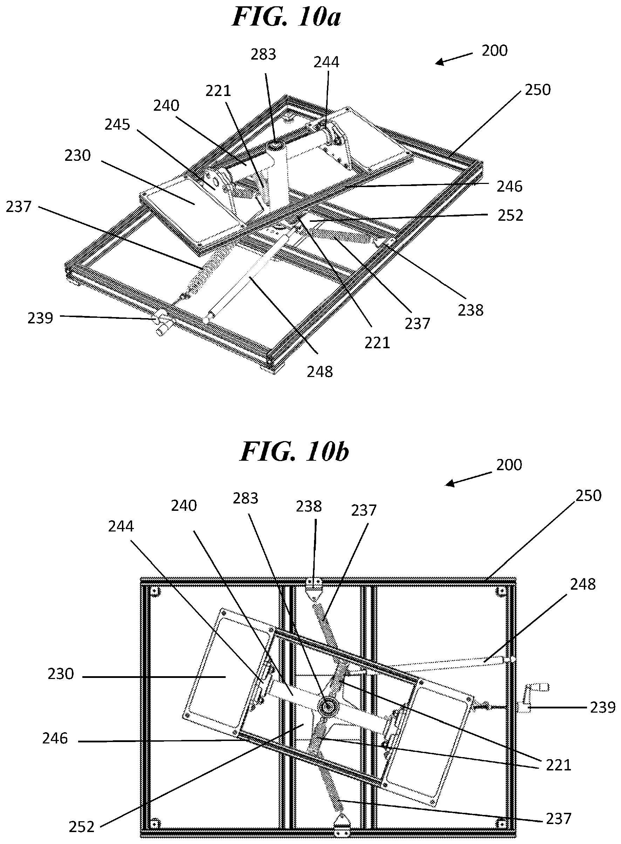

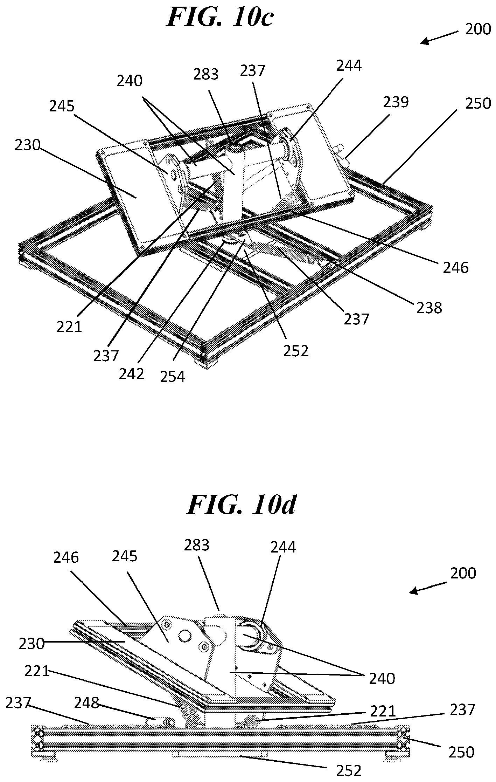

**Fig. 8** is a top view of the exercise device **200.** The user platform **246,** vertical pivots **244** or vertical plates **245** are not shown on **Fig. 8** but are depicted on the subsequent drawings in **Figs. 10a** - **10f****.** The exercise device **200** includes a base **250** with a horizontal support mount **252** to accommodate various mounting means for the support post **240.** One distinguishing feature of this embodiment is that the support post **240** is attached to the base of the machine by mounting the vertical column section of the support post **240** on top of the central horizontal pivot **242,** which is mounted on top of the support mount **252** (as further described below). Another distinguishing feature is that the vertical plates **245** with vertical pivots **244** are located on the inside of the user platform **246.**

The support post **240** in **Fig.8** (and in other subsequent iterations of the device) consists of a vertical column with the horizontal cross bar section mounted on top of it. The support post **240** is used for mounting the user platform **246** on top of the cross bar section of that support post (as shown, for example, in **Figs. 10a-10f**). A plurality of resistance elements **237,** in this embodiment springs, are mounted to the support post **240** to control the level of resistance, velocity and angle of pivot of the user platform **246** in the horizontal plane around the vertical axis **B-B.** Each horizontal resistance spring **237** is attached at one end to mounting arms **254** that co-act with the support post **240.** The other end of each horizontal resistance spring **237** is mounted to the base **250** by way of mounting members **238.** In the embodiment depicted in **Figs 8-10****,** there are three resistance elements or springs **237.** In the embodiment depicted, one of the resistance elements **237** can be adjusted by the spring adjuster **239,** to further control the level or resistance, velocity and angle of pivot of the user platform **246** in the horizontal plane around the vertical axis **B-B.**

In the embodiment depicted in **Figs. 8** (and in all other subsequent iterations of the device), a dampening piston strut **248** is also attached on one end to a mounting arm **254** and on the other end to the base **250.** Both the dampening piston strut **248** and horizontal resistance springs **237** create resistance and control in the rotation of the support post **240** to control the horizontal pivoting of the user platform **246** around the vertical axis **B-B.** Optionally, at least one or more of the resistance elements **237** may adjustable to further control the velocity and angle of pivot of the user platform **246** in the horizontal plane around the vertical axis **B-B.** The degree of resistance of the horizontal resistance springs **237** can be adjusted by extending or contracting the length of the springs by various means, including for example by a spring adjuster **239.** Optionally, the dampening element **248** is also adjustable to further control the level or resistance, velocity and angle of pivot of the user platform **246** in the horizontal plane around the vertical axis **B-B.**

Other types of resistance mechanisms (not shown) can also be used to create resistance for horizontal rotation of the user platform **246** around the vertical axis **B-B.** These mechanisms may include spring resistance mechanisms, rotary or linear dampers of various types (including magnetic, magnetic fluid, hydraulic, gas or spring), torsional springs, rubber band resistance, alternators, flywheel with various types of resistance (including magnetic, hydraulic, felt pad or other pads). These resistance mechanisms can be connected between: (a) the base **250** or horizontal support mount **252,** and (b) the mounting arms **254,** the support post **240** or user platform **246.** The mounting arms **254** are attached to the support post **240.** These mounting arms can be of various shapes and may include holes or slits.

Optionally, mounting arms **254** and/or the base **250** may be used to attach various other components to the exercise device, such as handle bars, a harness to assist the user with balancing on the device, amortization shock absorbers or rotation stoppers to soften or limit horizontal rotation of the user platform **246** at extreme points.

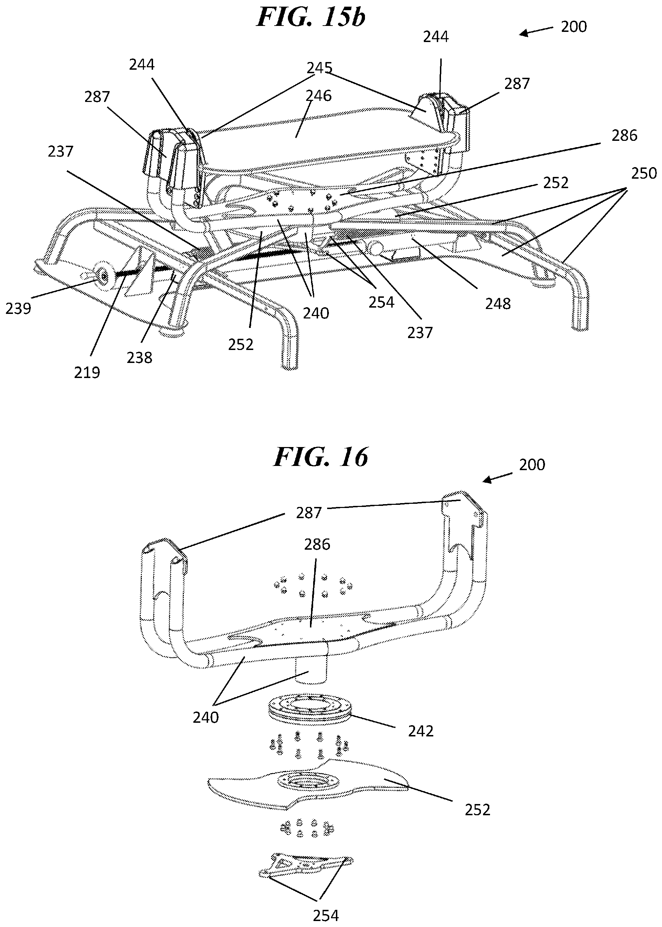

**Fig. 9** is a perspective view from the top lateral side of the exercise device showing vertical pivots **244** that are connected to the cross bar section of the support post **240.** **Fig. 9** shows the support post **240** mounted to the top of the central horizontal pivot **242** to permit rotation or pivoting in the horizontal plane around the vertical axis **B-B** as described above. Referring to **Fig. 16** for example, another embodiment of the central horizontal pivot **242** can be installed around the main shaft **224** inside the support post **240** (as seen in **Fig. 16****).**

**Fig. 10a** is a perspective view from the top lateral side of the exercise device with the user platform **246** installed. The user platform **246** is mounted to the vertical plates **245.** Vertical plates **245** are attached to vertical pivots **244** at both ends of the cross bar section of the support post **240.** Vertical pivots **244** allow for the vertical tilt or pivot of the user platform **246** around the horizontal axis **A-A** as described previously.

As described in detail above, the horizontal resistance springs **237,** dampening piston strut **248** or other dampening means create resistance for horizontal rotation or pivot of the user platform **246** around the vertical axis **B-B.** Referring to **Figs. 10a-10f****,** in addition to horizontal rotation resistance, the embodiment **200** can include vertical resistance springs **221** that create resistance for vertical tilt or pivot of the user platform **246** around the horizontal axis **A-A.**

This lateral movement resistance adds extra complexity and, coupled with the rotational motion resistance, is appropriate for more experienced athletes who would like to maintain and improve their balance, increase strength and endurance required for motion sports.

One end of each vertical resistance spring **221** can be attached to mounting arms **254** or the support post **240** (or other rotating part of the device) and the other end of each vertical resistance spring **221** can be attached to the user platform **246.** Other types of resistance mechanisms (not shown) can also be used create resistance for vertical tilt or pivot of the user platform **246** around the horizontal **A-A** axis. Such resistance mechanisms could include dampening piston struts, spring resistance mechanisms, torsional springs, rotary or linear dampers of various types (including magnetic, magnetic fluid hydraulic, gas or spring), rubber band resistance, hydraulic resistance, electric motor or alternator resistance or other type of resistance mechanisms (not shown). Such resistance mechanisms can be attached between: (a) vertical plates **245,** vertical pivots **244** or user platform **246** and (b) mounting arms **254,** support post **240,** base **250,** and horizontal support mount **252** or other parts of the device.

**Fig. 10b** is a top view of the exercise device **200.** **Figs. 10c-10d** are perspective views from the top lateral side of the exercise device showing the horizontal and vertical movements of the user platform **246.** The exercise device **200** creates "carving" simulation through the combination of lateral tilt or pivot (to simulate pronation and supination "edging" movement in skiing or hill to toe movement in snowboarding) and horizontal rotation movement. It uses a synergistic balance of resistance elements described herein and pivot points between the base, the support post and user platform to create a smooth, realistic simulation of the real world movements in motion sport activities.

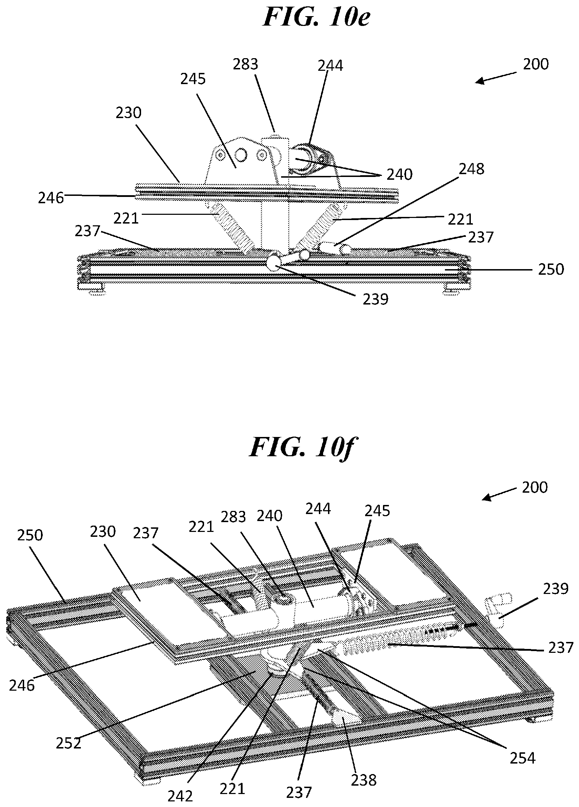

Another feature of the exercise device **200** is that the user platform **246** can be moved up and down the vertical plates **245** to create more or less stability of the user platform **246** around the horizontal **A-A** axis. A user can move the user platform **246** up the vertical plates **245** to reduce stability and make the exercise more challenging, or down to increase stability. **Figs. 10e** and **10f** are showing the views of the exercise device **200** with the user platform **246** moved all the way down to the bottom and up to the top of the vertical plates **245.**

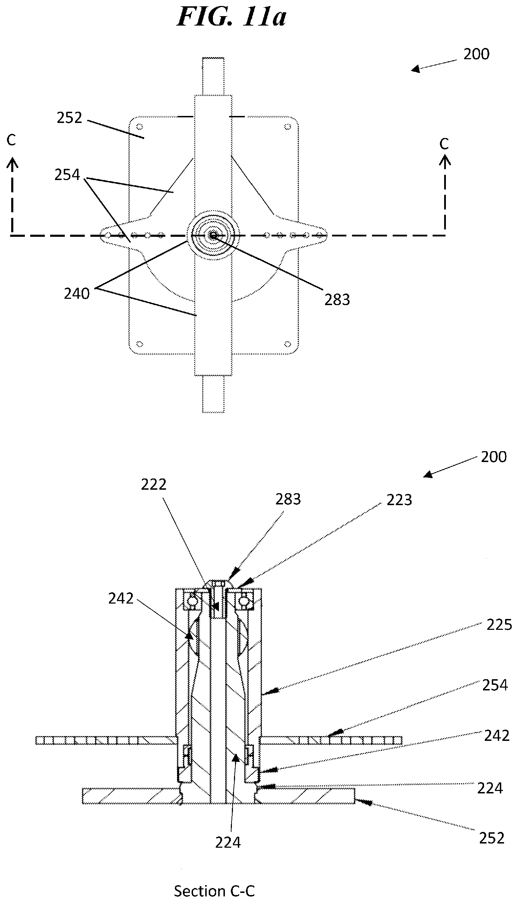

**Fig. 11a** is a top view and a cross sectional view taken along line **C-C** of the top view of vertical column the support post **240.** The support post **240** consists of a vertical column **225** that is rotationally mounted on top of the main shaft **224** and held in place by hex drive screw **222** that is thread through washer **223.** Central horizontal pivots **242** are located at the bottom of the vertical column **225** and inside of the vertical column **225** around the main shaft **224** to create rotation in the horizontal plane around the vertical axis **B-B** as described above. The main shaft **224** is mounted on top of the horizontal support mount **252.** A potentiometer (not shown) may be mounted on top of the support post **240.**

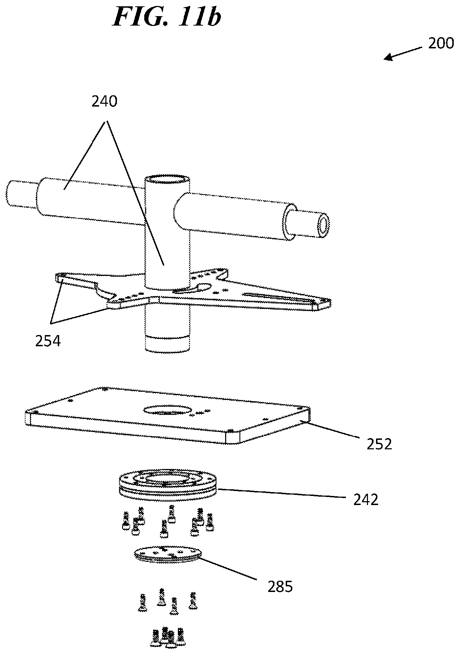

**Fig. 11b** is an alternative configuration of the support post **240** and central pivot **242.** This embodiment of the support post **240** consists of a vertical column section and cross bar section. The vertical column section of the support post **240** is mounted on top of the central pivot **242,** which consists of a donut shaped bearing. The outside ring of the donut bearing **242** is mounted on the horizontal support mount **252.** The vertical column section of the support post **240** is pressed into the inside ring of the donut bearing **242.** Additional support is created by the vertical column connector **285** that is bolted to the bottom of donut bearing **242.** Alternatively, the donut shaped central pivot **242** can be included between the cross bar section and vertical column section of the support post **240** (not shown).

### Figures 12-16

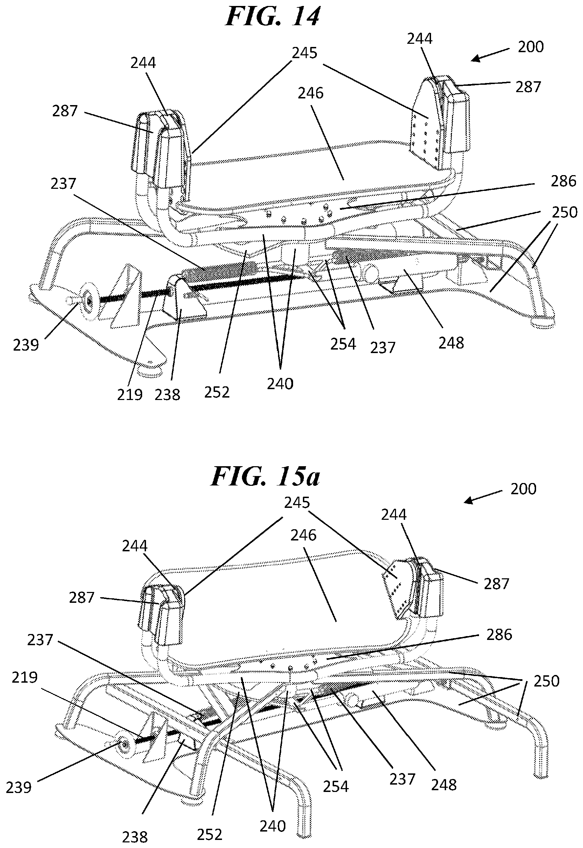

The embodiment shown on **Figs.12-16** has several distinguishing features that differentiate it from the prior embodiment in **Figs. 8-11****.** First, instead of mounting the vertical column section of the support post **240** to the base **250,** the support post **240** is attached to the base **250** by mounting its horizontal bar section on top of the central horizontal pivot **242,** which is mounted on top of the support mount **252.** Second, the horizontal bar section of the support post **240** is U-shaped (pointing upwards) and permits the mounting of vertical plates **245** and vertical pivots **244** to the outside of a user platform **246** (as seen in **Figs. 14** **&** **15****).**

**Fig. 12** is a top view of the exercise device **200.** The support post **240,** user platform **246,** vertical pivots **244,** vertical plates **245** and several other elements are not shown on **Fig.12** but are depicted on subsequent drawings in **Figs.13-16****.** The exercise device **200** includes a base **250** with a horizontal support mount **252** to accommodate various mounting means for the support post **240** (as further described below). Adjustable resistance elements **237** are mounted to the support post **240** to control the level of resistance, velocity and angle of pivot of the user platform **246** in the horizontal plane around the vertical axis **B-B** (as seen in **Figs. 14** and **15a**, **15b**). These springs are adjusted by the spring adjuster **239** and lead screw **219.** In the embodiment depicted, a dampening piston strut **248** is also attached on one side to the mounting arms **254** and on the other side to the base **250.** Horizontal pivot **242** is attached on top of the support mount **252.**

**Fig. 13** **is** a side lateral view of the device showing the exercise device **200** with the same elements as described in **Fig.12****.** In addition, it includes the support post **240** consisting of a U-shaped horizontal cross bar section, which is mounted on top of a vertical column. The horizontal cross bar section includes vertical pivots **244** on both ends. The horizontal cross bar section the support post **240** can be of various shapes or forms. In this embodiment, the horizontal cross bar section is an assembly consisting of two curved bars that are held together by vertical pivot connector plates **287** and cross bar connector plate **286.** The cross bar connector plate **286** is used for purposes of mounting the U-shaped horizontal cross bar section on top of the horizontal pivot **242.** The vertical column section is threaded through the horizontal pivot **242** and includes mounting arms **254** that are attached to the bottom of that vertical column. These mounting arms can be of various shapes and may include holes or slits. As further described below, the support post **240** is used for purposes of mounting the user platform **246.**

**Fig. 14** is a side lateral view of the device showing the exercise device **200** with the same elements as described in **Fig.12** and **13****.** In addition, it includes the user platform **246** mounted between vertical plates **245.** Vertical plates **245** are attached to vertical pivots **244** at both ends of the cross bar of the support post **240.** Vertical pivots **244** allow for the vertical tilt or pivot of the user platform **246** around the horizontal axis **A-A.** This figure is showing in more detail various resistance elements that control the level of resistance, velocity and angle of pivot of the user platform **246** in the horizontal plane around the vertical axis **B-B.** Each horizontal resistance spring **237** is attached on one end to mounting arms **254** at the bottom the support post **240.** The other end of the horizontal resistance springs **237** is mounted to sliding mounting members **238** that are moving along the lead screw **219.** These resistance elements **237** are adjustable by extending or contracting the length of the springs along the lead screw **219** by various means, including by the spring adjuster **239.** In the embodiment depicted, a dampening piston strut **248** is also attached on one side to the mounting arms **254** and on the other side to the base **250.** Both the dampening piston strut **248** and horizontal resistance springs **237** create resistance and control in the rotation of the support post **240** to control the horizontal pivoting of the user platform **246** around the vertical axis **B-B.** Optionally, the dampening element **248** is also adjustable to further control the level or resistance, velocity and angle of pivot of the user platform **246** in the horizontal plane around the vertical axis **B-B.**

Other types of resistance mechanisms (not shown) can also be used create resistance for horizontal rotation of the user platform **246** around the vertical axis **B-B.** These mechanisms may include spring resistance mechanisms, torsional springs, rotary or linear dampers of various types (including magnetic, magnetic fluid, hydraulic, gas or spring), rubber band resistance, alternators, flywheel with various types of resistance (including magnetic, hydraulic, felt pad or other pads). These resistance mechanisms can be connected between: (a) the base **250** or horizontal support mount **252** and (b) the mounting arms **254,** support post **240** or user platform **246.**

Various types of resistance mechanisms (not shown) can be used create resistance for vertical tilt or pivot of the user platform **246** around the horizontal **A-A** axis. They could include dampening piston struts, spring resistance mechanisms, torsional springs, rotary or linear dampers of various types (including magnetic, magnetic fluid hydraulic, gas or spring), rubber band resistance, hydraulic resistance, electric motor or alternator resistance or other type of resistance mechanisms (not shown). Such resistance mechanisms can be attached between: (a) vertical plates **245,** vertical pivots **244,** or user platform **246,** and (b) mounting arms **254,** support post **240,** base **250,** and horizontal support mount **252** or other parts of the device.

Optionally, mounting arms **254** and/or the base **250** may be used to attach various other components to the exercise device, such as handle bars, a harness to assist the user with balancing on the device, amortization shock absorbers or rotation stoppers to soften or limit horizontal rotation of the user platform **246** at extreme points.

**Fig. 15a** and **15b** are additional views of the device. **Fig. 15a** is a top lateral side of the exercise device showing the movement of the user platform **246** vertically and horizontally. The exercise device **200** creates "carving" simulation through the combination of vertical tilt or pivot (to simulate pronation and supination "edging" movement in skiing or hill to toe movement in snowboarding) and horizontal rotation movement. It uses a synergistic balance of resistance elements described herein and pivot points between the base, the support post and user platform to create a smooth, realistic simulation of the real world movements in motion sport activities. The user platform **246** can be moved up and down the vertical plates **245** to create more or less stability of the user platform **246** around the horizontal **A-A** axis. A user can move the user platform **246** up the vertical plates **245** to reduce stability and make the exercise more challenging, or down to increase stability. **Fig. 15b** is another side view of the exercise device **200** with the user platform **246** moved up to the top of the vertical plates **245.**

**Fig. 16** is an exploded perspective of the support post **240** in this embodiment **200.** The support post **240** consists of a vertical column with a U-shaped horizontal cross bar section mounted on top of it. The horizontal cross bar section can be of various shapes or forms. In this embodiment, the horizontal cross bar section is an assembly consisting of two substantially parallel U-shaped curved bars that are secured together by vertical pivot connector plates **287** mounted at the ends of such curved bars and a cross bar connector plate **286** in the center of the u-shape. Vertical pivots **244** are pivotally mounted to each vertical pivot connector plate **287.** The central pivot **242** is represented by a donut bearing and the vertical column section of the support post **240** is threaded through the center of the central pivot **242.** The outside ring of the central pivot **242** donut bearing is mounted to the cross bar connector plate **286** and therefore connects the central pivot **242** to the horizontal cross bar section of the support post **240.** The inside ring of the central pivot **242** donut bearing is mounted to the horizontal support mount **252,** which in turn is mounted to the base **250.** The mounting arms **254** that are attached to the bottom of that vertical column after it is threaded through the center of the central pivot **242.**

### Figures 17-38

**Figs 17** through **38** illustrate other embodiments **300** of the exercise device of this invention, which includes the same components as depicted in **Figs. 8-11** of the exercise device **200,** with the exception that springs **221** or any other kind of vertical resistance is not included. In these embodiments **300,** the vertical tilt or pivot of the user platform **346** around the horizontal **A-A** axis is controlled by a guiding tilt mechanism. This guiding tilt mechanism provides more stability for the user platform **346** and therefore facilitates the usage of the exercise device with a ski module or snowboard module that can be attached to the user platform **346** (as further described in Figs. **27-30** below). The guiding tilt mechanism can be in the form of a linkage system or guiding rails, tracks or ramps system. Both systems are further described below.

**Figs. 17** through **30** show the embodiment of the exercise device of this invention **300** that utilizes the same elements from **Figs. 8-11** of the previous embodiment **200** in order to affect horizontal pivot/rotation, vertical tilt/pivot and dampening means. However, the vertical resistance springs **221** are not used. In addition, the exercise device **300** incorporates a guiding tilt mechanism in the form of a linkage system to create a smooth yet stable and guided vertical tilt or pivot movements of the user platform **346** around the horizontal **A-A** axis.

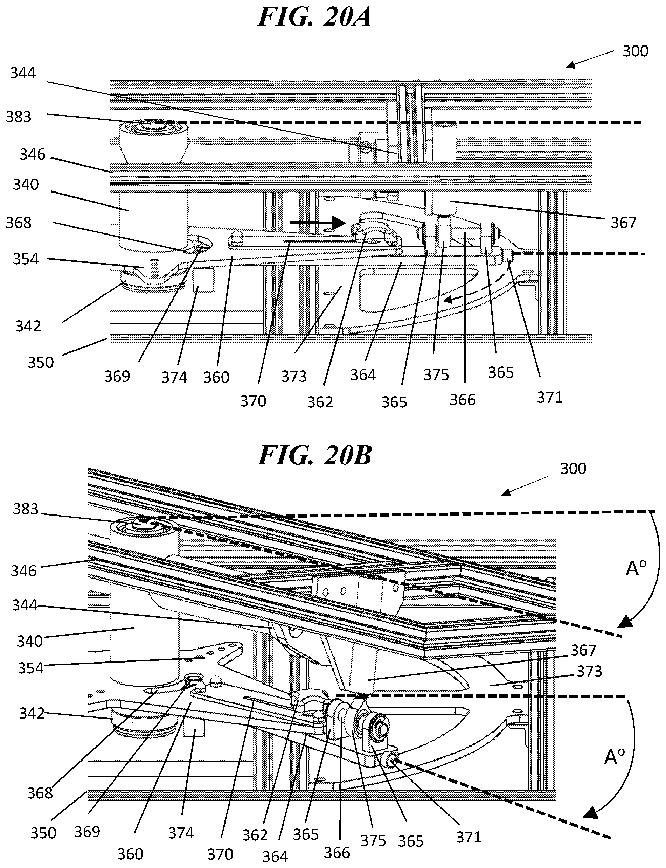

**Fig. 17** is a perspective view from the top lateral side of the exercise device **300.** The vertical pivots **344,** user platform **346** and several other elements are not shown on **Fig.17** but are depicted on the subsequent drawings. **Fig.17** shows the same elements as shown in **Fig. 8****.** However, in addition, it includes the linkage system components that are described in detail in **Figs. 20-26****.** **Fig. 18** is a top view of the device embodiment **300** before installing the vertical pivots **344** and the user platform **346.**

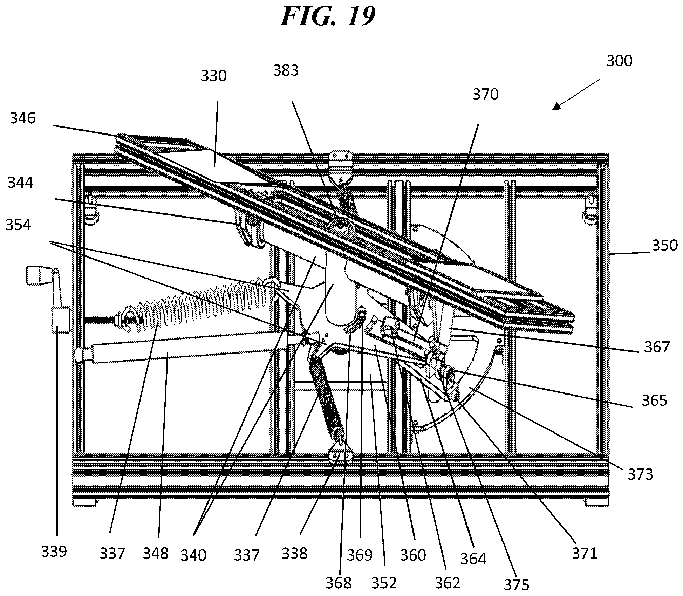

**Figs. 19** is a perspective view from the top lateral side of the exercise device **300** with the vertical pivots **344** attached to the support post **340** and with the user platform **346** installed. This figure shows the movement of the user platform side to side that creates "carving" simulation through the combination of lateral tilt or pivot and horizontal rotation movement. The exercise device **300** further includes an adjustable guiding linkage plate mechanism that guides and controls the angle of tilt of the user platform **346** in the vertical plane.

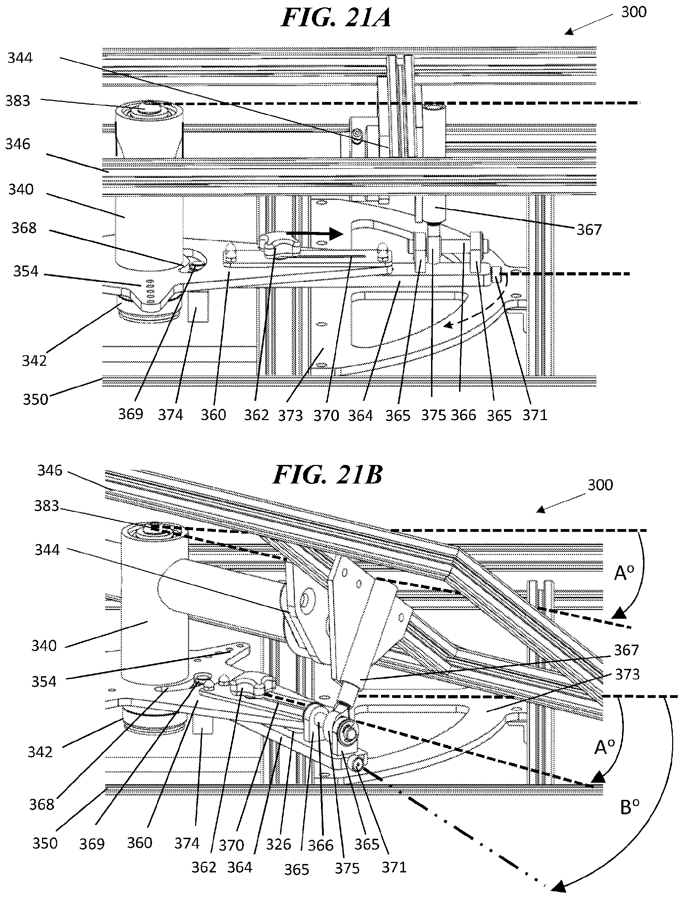

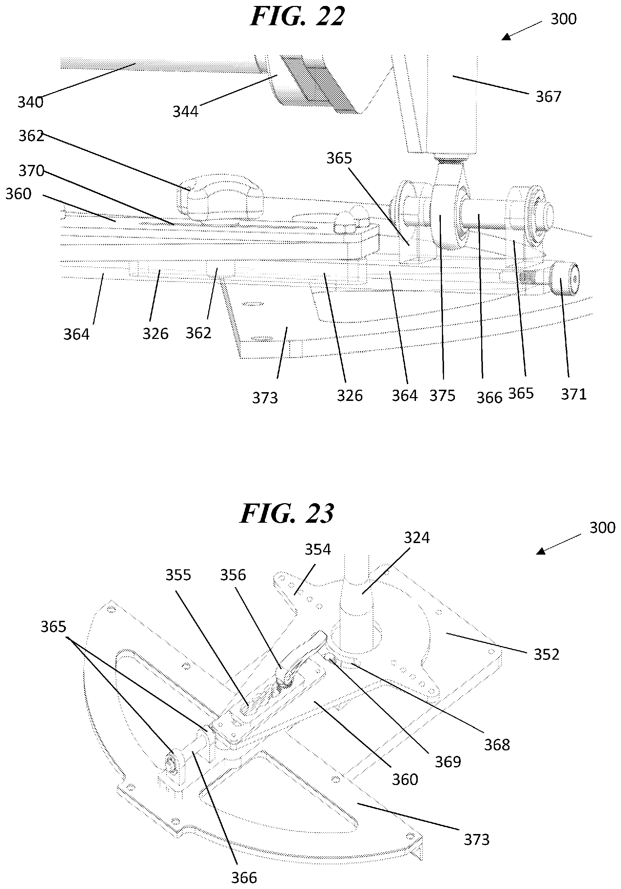

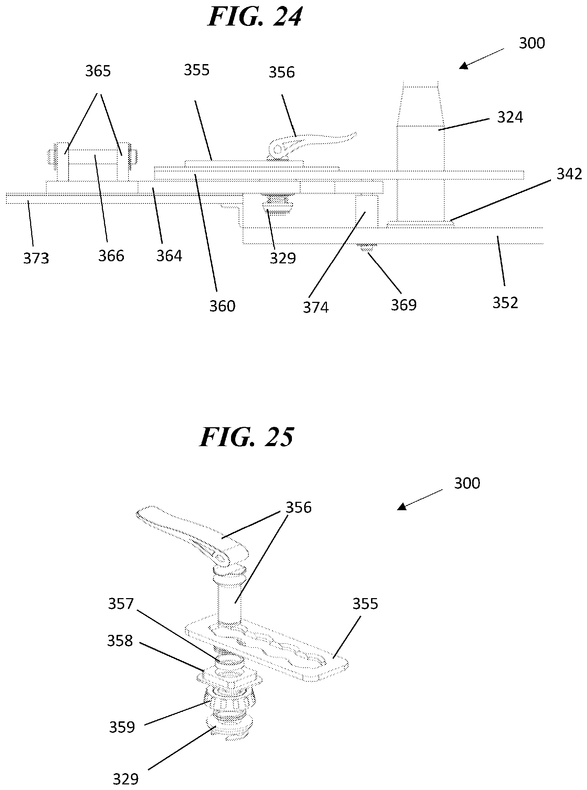

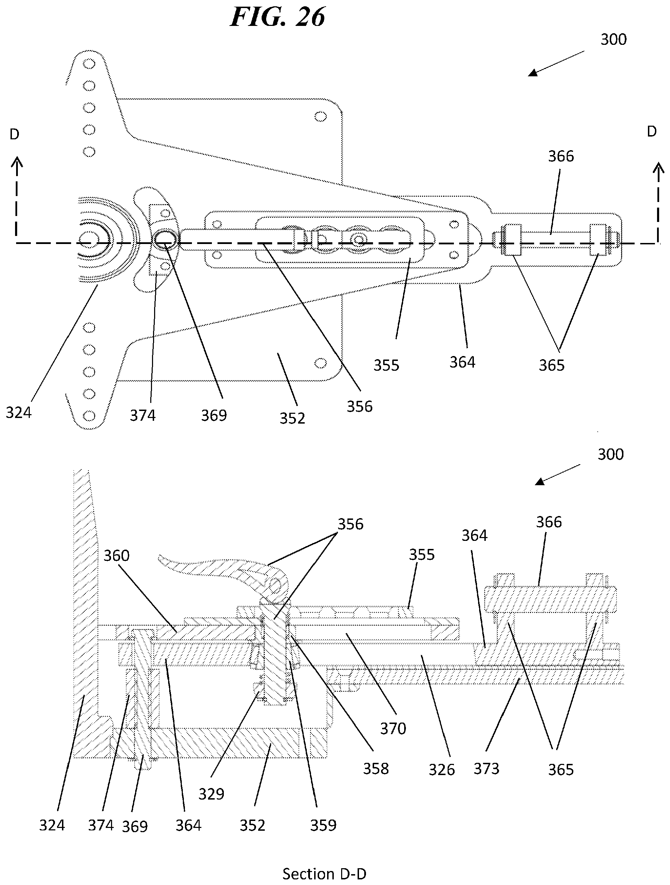

The linkage system is presented in more detail in **Figs. 20-26** and consists of the following elements:
(a) Top plate **360** includes mounting arms **354** and straight slit **370** along the middle of the elongated section of that plate. It also includes a semi-circular slit **368** between the mounting arms **354.** Top plate **360** is affixed to support post **340** and rotates with the support post **340.**
(b) Bottom plate **364** includes a straight slit **326** along the length of and in the middle of that plate **364** (as seen on **Fig. 22****,** **26** and partially on **Fig.21B** and other drawings). One end of the bottom plate **364** is supported by the supporting base **374** (as seen in detail on **Figs. 20-21**, **24** and **26).** The bottom plate **364** is attached to and rotating around the pivot post **369** that is inserted into the supporting base **374** and protruding through the semicircular slit **368** (as seen in detail on **Figs 24****,** **26** and partially on **Figs. 20-21****).** The other end of the bottom plate **364** is attached to the supporting roller **371** and rolls on top of the horizontal roller plate **373** in semi-circular motion. The supporting roller **371** supports the bottom plate **364** when it rotates around the pivot post **369.**
(c) Referring to knob and roller pin **362,** the knob **362** is attached to a pin that is threaded through a shuttle with flanges **358** (shown in more detail on **Fig. 25****).** The shuttle with flanges **358** travels within the slit **370** along the middle of the top plate **360** and serves to reduce the freedom of movement of the knob and roller pin **362** within the slits **370** and **326.** A roller is attached to the bottom of the pin (as seen in more detail on **Fig. 22****).** The roller pin is threaded through slit **370** along the middle of the elongated section of top plate **360** and also through slit **326** along the middle of the bottom plate **364.** The knob and roller pin **362** can be moved along the slits **370** and **326** and the roller pin's position can be fixed anywhere along the slits by tightening the knob.
(d) two posts **365** that are attached at the end of the bottom plate **364** with a connecting horizontal bar **366** between the posts;
(f) vertical bar and/or telescopic tube **367** that has the loop with bearing **375** at the bottom of it. The top end of the vertical bar and/or telescopic tube **367** is connected to the user platform **346.** Both the user platform **346** and top plate **360** are attached to the support post **340.** Therefore, as the support post **340** and user platform **346** rotate, the top end of the vertical bar and/or telescopic tube **367** moves in sync with the top plate **360.** The bottom end of the vertical bar and/or telescopic tube **367** is connected to the bottom plate **364** by the loop with bearing **375** that is threaded through the horizontal bar **366.** Therefore, the bottom end of the vertical bar and/or telescopic tube **367** moves together with the bottom plate **364.** If the bottom plate **364** and top plate **360** rotate by the same amount of degrees around their respective pivot points, then the top end and bottom end of the vertical bar and/or telescopic tube **367** also move by the same amount of degrees. Therefore, the vertical bar and/or telescopic tube **367** stays in a vertical position and user platform **346** does not tilt or pivot. If the bottom plate **364** rotates by more degrees than the top plate **360,** then the bottom end of the vertical bar and/or telescopic tube **367** also moves more than the top end. Therefore, the vertical bar and/or telescopic tube **367** tilts and causes user platform **346** to tilt or pivot.

The degree of rotation of the bottom plate **364** relative to the top plate **360** is determined by the position of the knob and roller pin **362** within the slits **370** and **326.** **Figs. 20A** and **20B** demonstrate what happens when the knob and roller pin **362** is moved along the slits closer to the vertical bar and/or telescopic tube **367.** In such case, when the user pushes on the user platform **346** and therefore rotates the top plate **364,** the knob and roller pin **362** pushes on the bottom plate **360** at a point which further away from its point of rotation around the pivot post **369.** This causes the top plate **360** and bottom plate **364** to rotate in sync and by the same amount of **A°** degrees **(****Fig. 20B****).** Therefore, the top end and bottom end of the vertical bar and/or telescopic tube **367** also move by the same amount. Hence, the vertical bar and/or telescopic tube **367** stays in a vertical position and user platform **346** does not tilt or pivot around the horizontal axis **A-A.**

**Figs. 21A** and **21B** demonstrate what happens when the pin and knob **362** is moved along the slits closer to the pivot post **369.** In such case, when the user pushes on the user platform **346** and therefore rotates the top plate **364,** the knob and roller pin **362** pushes on the bottom plate **360** at a point which is closer to its point of rotation around the pivot post **369.** This allows the top plate **364** and bottom plate **360** to separate and turn by unequal amount of degrees as they complete the rotation. The top plate **364** rotates by A° degrees but the bottom plate **360** rotates by the much larger amount of B° degrees **(****Fig. 21B****).** This means that the bottom end of the vertical bar and/or telescopic tube **367** also moves by B° degrees and the top end moves by the lesser amount of A° degrees. Therefore, the vertical bar and/or telescopic tube **367** tilts and causes user platform **346** to tilt or pivot vertically around the horizontal axis **A-A.**

**Fig. 22** is showing the knob and roller pin **362** inside both slits **370** and **326** along the middle of the top plate **360** and bottom plate **364** respectively. It also shows a closer view of various other elements of the linkage system, including the vertical bar and/or telescopic tube **367,** the loop with bearing **375,** the posts **365** with a connecting horizontal bar **366** that is thread through the loop with bearing **375.**

Figs **23-26** show a variation of the linkage system described above that replaces the knob and roller pin **362** with quick release skewer lock **356.** **Figs. 23** is a perspective view from the top lateral side of that variation. It includes the metered board **355** mounted on top of the top plate **360.** The metered board **355** has recessed cone-shaped holes designed for housing the quick release skewer lock **356.** These holes prevent movement along the slits **370** and **326** when the quick release skewer lock **356** is locked in. **Figs. 24** is a view from the side of the linkage system with the metered board **355** and quick release skewer lock **356.**

The quick release skewer lock **356** and its related components are presented in more detail in **Fig. 25****.** The quick release skewer lock **356** is threaded through the metered board **355** as described above. It is also threaded through the shuttle with flanges **358** that travels within the slit **370** along the middle of the top plate **360.** The shuttle with flanges **358** incorporates bushing **357** to reduce the freedom of movement of the quick release skewer lock's pin. A cone shaped tapered bearing **359** is installed below the shuttle with flanges **358** and is secured by the cap **329** at the bottom. The tapered bearing **359** travels only within the slit **326** along the middle of the bottom plate **364.**

**Fig. 26** a cross sectional view of the linkage system, which shows how the quick release skewer lock **356** locks the linkage system to secure position of the lock's pin within slits **370** and **326.** The inner edge track of the slit **326** is angled to accommodate the cone shape of the tapered bearing **359.** When the user locks the quick release skewer lock **356** and its pin is pulled up, the cone shape of the tapered bearing **359** moves up into the angled inner edges of the slit **326.** This locking pull force secures the tapered bearing **359** inside the slit **326** without hindering its motion within it.

There may be other alternative means by which position of the pin can be fixed along slits **370** and **326** in the top plate **360** and bottom plate **364.** For example, straight slits **370** and **326** can be replaced with holes (not shown) and the position of the pin can be fixed by inserting the pin through such holes. Alternatively, the pin can travel along a lead screw that can be installed along the elongated section of top plate **360.**

The linkage system can be placed on one end of the device, as shown on **Figs. 17-30****,** or on both ends of the device (not shown). The linkage system is included in the embodiment 300 and the vertical resistance springs **221** (that are described in the embodiment **200)** are excluded.

In addition, the user platform **346** in the embodiment **300** is connected to the vertical pivots **344** without any vertical connection bars that are similar to vertical bars **245** in the embodiment **200).** All other components of this embodiment **300** are substantially the same as in embodiment **200** and have the same functionalities and therefore are not repeated here.

Referring for example to **Fig. 19****,** in practice the user would be positioned atop the user platform **346** on foot mounts **330** and can affect rotational movements of the user platform **346** in the horizontal plane by moving their body around the vertical axis **B-B** and concurrently affect a lateral tilt or pivot of the user platform **346** around the horizontal **A-A** axis. The user starts in the central position and then as he rotates the user platform **346** in one direction, it starts to tilt. The user then rotates the user platform **346** in the opposite direction and the direction of the tilt changes as well. The user would continue to traverse through a series of undulating motions culminating in a physical workout, rehabilitation or general skill training session.

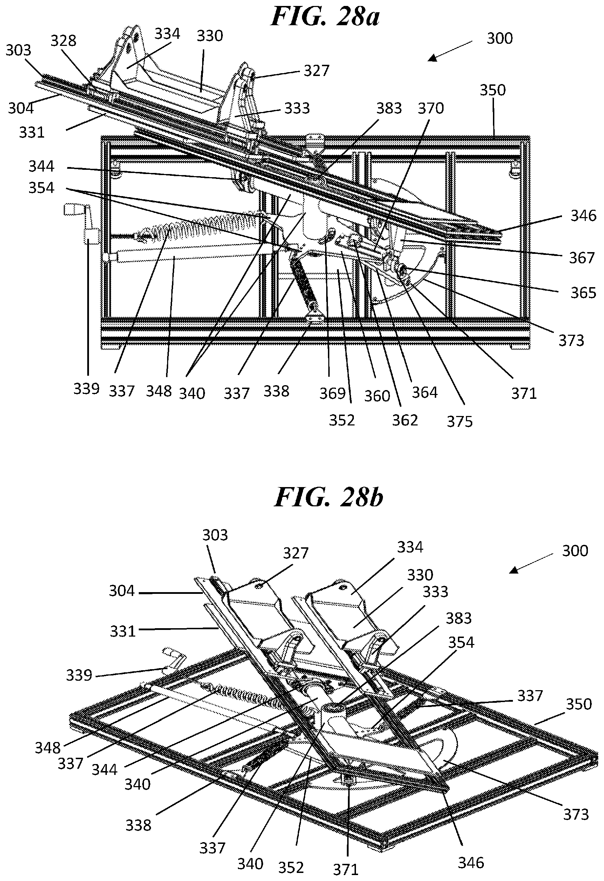

The exercise device embodiment **300** of this invention may include a removable ski module described on Figs. **27a** and **27b****.** The ski module consists of foot mounts **330** in the form of cradles with mounting members **334** that are suspended above the ski foot base **331.** The mounting members **334** (and therefore the foot mounts **330)** and are pivotally attached on pivots **327** to vertical supports **333.** The vertical supports **333** are mounted on the linear bearings **328** that slide horizontally on tracks or rails **303.** The tracks or rails **303** are substantially parallel to each other. The foot mounts **330** pivot vertically on pivots **327.** The linear bearings **328** create horizontal movement of foot mounts **330** back and forth along the tracks or rails **303.** The linear bearings **328** and rails **303** are mounted on the support plates **304.** The support plates are mounted on the ski foot base **331** and can be moved horizontally side to side to increase or decrease the width of the user's stance. **Figs. 28a** and **28****-b** are perspective views from the top lateral side of the exercise device **300** with the ski module mounted on top and at the end of the user platform **346.** When the user platform **346** pivots or rotates, the foot mounts **330** move side to side, thus enhancing the simulation of edging of skis (i.e. pronation and supination movement in alpine skiing). In addition, the foot mounts **330** moves horizontally back and forth along rails or tracks **303.** There may be springs, dampers or other resistance mechanism installed along the rails or tracks **303,** for example between the support plates **304** and vertical supports **333.** These resistance mechanisms will create resistance to horizontal movements of foot mounts **330** along the rails or tracks **303.** In addition to pronation and supination pivotal movement of foot mounts **330,** this horizontal back and forth movement of foot mounts **330** along the rails or tracks **303** creates even more realistic ski sensation because it allows users to put more weight on the outside leg when rotating the user platform (i.e., lateral weight distribution) and shift the inside leg forward to always keep the toes in a line that is parallel to user's shoulders throughout the turn. Alternatively, the foot mounts **330** for ski position may be linked through a system of bars, cables or other linkages (not shown) to other parts of the device in a way that would make them automatically move back and forth in a horizontal plane as user platform **346** rotates around the vertical axis **B-B.** Additionally, the foot mounts **330** for ski position may incorporate a removable heel ramp (not shown) that can be placed under the ski foot base **331** on its heel side to lift up the user's heels and further simulate a downhill ski slope.

Referring to **Figs. 29** and **30****,** the exercise device **300** of this invention may also include a removable snowboard module. The snowboard modules resembles one large ski cradle; it is similar to that described above and is utilizing some of the same components that are used in other iterations of the exercise device described herein, see e.g. **Fig 16****.** It consists of two substantially parallel curved U-shaped bars that are held together by vertical pivot connector plates **387** at the ends of the bars and a central connector plate **386.** The snowboard module is mounted on top of user platform **346.** The snowboard module is in the form of a large cradle that consists of another user platform **346** (the **"snowboard user platform")** attached to the vertical plates **345.** The vertical plates **345** (and therefore the snowboard user platform) are pivotally attached on vertical pivots **344.** The vertical pivots **344** are attached to the pivot connector plates **387.** The snowboard user platform is suspended above the user platform **346** and pivots both horizontally with the user platform **346** directly below it and vertically on pivots **344.**

**Fig. 30** is a perspective view from the top lateral side of the exercise device **300** with the snowboard module mounted on top of the user platform **346.** When the user platform **346** pivots or rotates, the snowboard user platform moves both horizontally and vertically side to side, thus enhancing the simulation of edging of snowboard (i.e. lateral movement in snowboarding). There may be springs, dampers or other resistance mechanism installed to create resistance of lateral movements of snowboard user platform. Various types of resistance mechanisms (not shown) can be used create resistance for vertical tilt or pivot of the snowboard user platform around the horizontal **A-A** axis. They could include dampening piston struts, spring resistance mechanisms, torsional springs, rotary or linear dampers of various types (including magnetic, magnetic fluid hydraulic, gas or spring), rubber band resistance, hydraulic resistance, electric motor or alternator resistance or other type of resistance mechanisms (not shown). Such resistance mechanisms can be attached between (1) vertical plates **345,** vertical pivots **344,** or snowboard user platform and (2) U-shaped bars or other parts of the support post **340,** vertical pivot connector plates **387,** central connector plate **386** and user platform **346** or other parts of the device.

The magnitude of lateral tilt or pivot of the user platform **346** in the vertical plane around the horizontal axis **A-A** can be controlled by other variations of linkage systems. For example, **Figs. 31-34** depict alternative linkage mechanisms that utilize rotating plate **476,** which can be of different shape or form. One end of the rotating plate **476** is connected through a horizontal bar **477** to mounting arm **454** that are attached to support post **440.** The other end of the rotating plate **476** is connected to vertical bar and/or telescopic tube **467** either directly, as in **Fig 31** or through horizontal bars **477,** as in **Figs. 32 - 34****.** The vertical bar and/or telescopic tube **467** is connected to the user platform **446.** The rotating plate **476** pivots around vertical pin or bolt **479** that attaches that plate to horizontal support mount **452** or directly to base **450.** As the mounting arms **454** rotate with the support post **440** and the user platform **446,** they push on the horizontal bar **477,** which in turn pushes the rotating plate **476** to rotate around that vertical pin or bolt **479.** The degree of rotation around that vertical pin or bolt **479** determines the magnitude of lateral tilt or pivot of the user platform **446.**

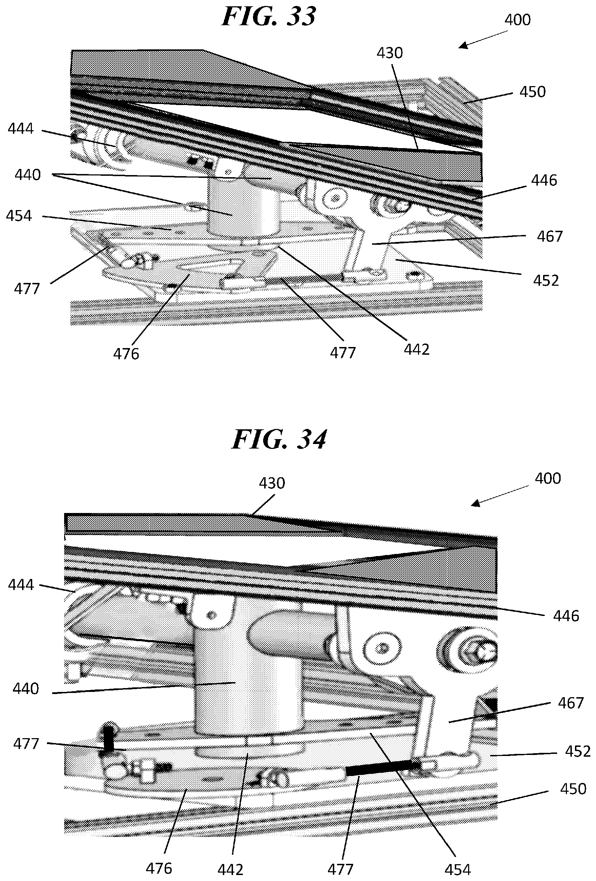

Such degree of rotation or pivot may be controlled by various methods. One such method is by changing position of horizontal bar **477** that is connected to mounting arms **454** along the openings or slit in the mounting arms **454.** When the horizontal bar **477** is moved closer to the end of the mounting arm **454,** the rotating plate **476** increases its degree of rotation around the vertical pin or bolt **479,** which pushes more on the vertical bar and/or telescopic tube **467** thus increasing its angle, which in turn will increase the angle of platform **446.** The rotating plate **476** may have a slit (such as slit **478** on **Figs. 31** and **32****)** along which the horizontal bar **477** will slide once it is moved along the openings or slit in the mounting arms **454.** Alternatively, the rotating plate **476** may not have a slit (such as plate **476** shown on **Fig. 33-34****).** In another variation of the linkage system (not shown above), the user platform can be linked to the mounting arms **454** or directly to the support post **440** through a system of cables (replacing the horizontal bars **477)** and pulley wheels (replacing the rotating plate **476).**

**Figs. 35-38** of the exercise device of this invention **500** depict alternative mechanisms to control the tilt of the user platform **546.** This embodiment utilizes the same elements of exercise device **300** to affect horizontal rotation, pivoting and dampening means. However, in this embodiment **500,** not according to the invention, the linkage system is replaced with adjustable or removable arced set of ramps, rails or tracks **590** and rollers (bearing wheels) **592** to control the angle of the lateral tilt or pivot movements of the user platform **546** around the horizontal **A-A** axis. The ramps, rails or tracks **590** can be placed at both ends of the device, as shown in **Fig. 35A** and **35B****,** or only at one end of the device (not shown). The angles of the ramps, rails or tracks **590** may be adjusted (e.g., by elevating one side of the ramps, rails or tracks) in order to control the amount of lateral tilt or pivot movement of the user platform **546** around the horizontal axis **A-A.** Alternatively, a ramp, rail or track can be removed and substituted with another ramp, rail or track that has a steeper or flatter angle. Mounted under the user platform **546** are rollers (bearing wheels) **592** that are diagonally disposed as can be seen in the drawings (or they can be attached to all four corners of the user platform **546).** In practice the user would be positioned atop the user platform **546** on foot mounts **530** and can affect rotational movements of the user platform **546** in the horizontal plane by moving their body around the vertical axis **B-B** and concurrently effect a lateral tilt or pivot of the user platform **546** around the horizontal **A-A** axis.

Other than the ramps, rails or tracks that control the tilt or pivot of the user platform **546,** the elements of the device **500** and their functionalities are the same as the elements from the previous embodiment **300** and therefore they are not repeated here.

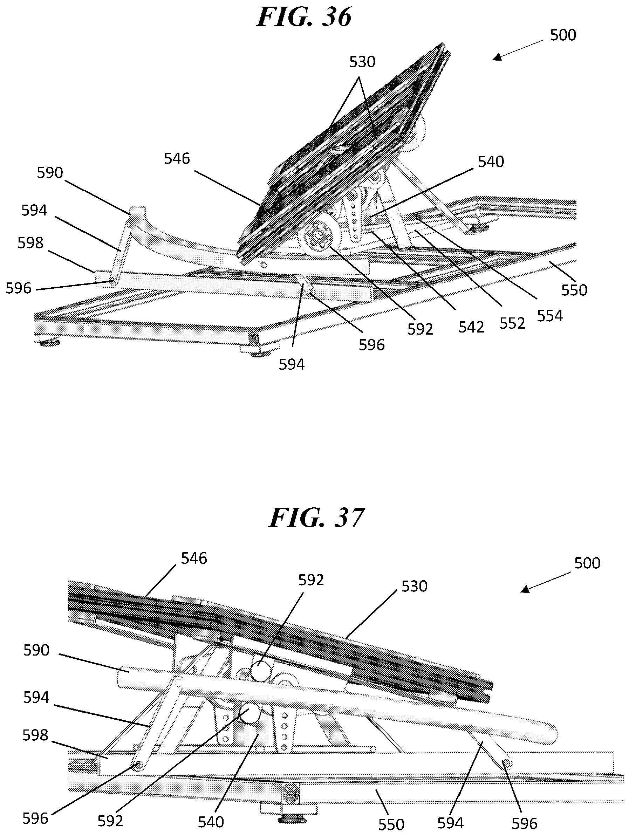

**Fig. 36** is an image of a portion of the exercise device **500** representing a variation of rails, tracks or ramps that allows to control the overall lateral tilt or pivot of the user platform **546** around the horizontal **A-A** axis. If both ends of ramps, rails or tracks are level, then the ramps, rails or tracks will provide a relatively gentle ride with small lateral tilt or pivot of the user platform **546** around the horizontal **A-A** axis. If one end of ramps, rails or tracks is raised above the other end then the angle of ramps, rails or tracks will increase and result in extreme ride with large lateral tilt or pivot of the user platform **546** around the horizontal **A-A** axis. This can be achieved by having the arced ramps, rails or tracks **590** attached to adjustable lever arms **594** that are pivotally attached at **596** to a mounting member **598** that is transversely mounted to base **550.** Vertical movement and height of arced ramps, rails or tracks **590** can be controlled by mechanical means, such as lead screws, or electronic means (not shown) in order to control the rate of travel as desired. By increasing or decreasing the angle of the lever arms **594,** the angle of arced ramps, rails or tracks **590** are raised or lowered in the vertical plane. Such arced ramps, rails or tracks **590** can be installed on one side or on both sides of the base **550** (opposite each other). The amount of lateral tilt or pivot of the user platform **546** around the horizontal **A-A** axis is determined by the geometry and height of the arced portions of ramps, rails or tracks **590.**

**Fig 37** is an image of portion of the exercise device **500** showing another variation of rails, tracks or ramps that controls the tilt of the user platform **546** around the horizontal **A-A** axis. This embodiment includes adjustable arced rails or tracks with two rollers (bearing wheels) **592,** one positioned above the ramp, rails or track **590** and one below.

**Fig. 38** is an image of a portion of the exercise device **500** showing another variation of ramps, rails or tracks mechanism that control the tilt of the user platform **546** around the horizontal **A-A** axis. In this embodiment the two arced ramps, rails or tracks **590** are unified by a horizontal cross-piece **591** in order to pair or synchronize their height adjustment. Another way of pairing or synchronizing their height adjustment is by electronic means or mechanical means, such as by connecting the ramps, rails or tracks **590** with lead screws (not shown). Each arced ramp, rail or track **590** is affixed to pivoting linkage arms **593** that can rotate via upper pivot points **597** located at the upper portion of vertical support plates **595.** Vertical support plates **595** are fixed to transverse mounting plates **551,** which are attached to the base **550.** The pivoting linkage arms **593** have a predisposed amount of rotational travel allowed by way of slits **599** in plates **595** that limit the overall pivoting motion via stop means or lead screws (not shown) attached to the base **550.** Similarly to the above, this embodiment creates a modified series of movements with adjustable lateral tilt or pivot of the user platform **546** around the horizontal **A-A** axis based on the geometry and height of the arced portions of the ramps, rails or tracks **590.**

In any variation of this invention the magnitude of lateral tilt or pivot of the user platform in the vertical plane around the horizontal axis **A-A** can be controlled by many other types of rails, ramps or track systems.

### Figs 39-40

**Figs. 39** and **40** show yet another embodiment of the exercise device of this invention **600.** This design utilizes any of the elements from the previous embodiments **100** - **500.** However, instead of the vertical pivots (described as **244, 344, 444,** and **544** in previous embodiments) and central horizontal pivot (described as **242, 342, 442,** and **542** in previous embodiments), the lateral tilt or pivot of the user platform around the horizontal axis **A-A** and horizontal pivot of the user platform in horizontal plane around the vertical axis **B-B** are created by the spherical bearing / ball joint **684** mounted to the support post **640.** Spherical bearing/ball joint **684** is installed on top of the support post **640** and under the user platform **646.** Alternatively, spherical bearing/ball joint **684** may be positioned under the support post **640** and on top of the base **650** (such position is not shown on the drawings) or between the vertical column section and horizontal cross bar section to the support post **640.** User platform **646** has complete degree of freedom because of spherical bearing/ball joint **684** and can move in any direction, including up, down, left or right. However, any ramps, rails or linkage mechanisms described in embodiments **300** through to **500** would limit the degree of freedom of rotation of user platform 646 and create a smooth yet stable and guided lateral tilt or pivot movements of the user platform around the horizontal axis A-A and horizontal pivot of the user platform in horizontal plane around the vertical axis **B-B.**

### Figs 41-43

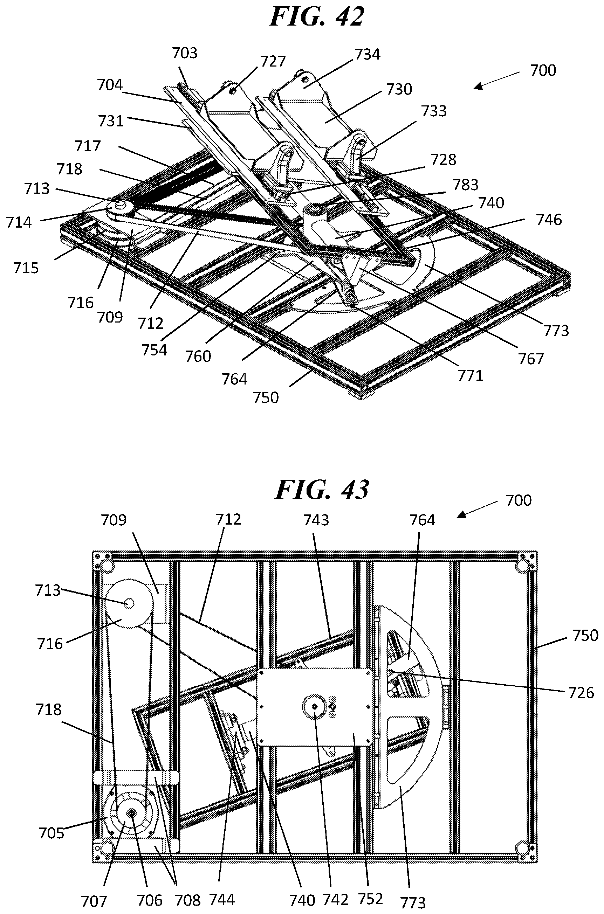

The horizontal rotation resistance of user platform in any embodiment of the device **100** through to **600** can be controlled by an alternator-based system, which is further described in the embodiment of the device **700** on **Figs 41 - 43****.** With the exception of the alternator-based horizontal resistance system, the elements of the device **700** and their functionalities are the same as the elements from the previous embodiment **300** and therefore they are not repeated here. The alternator-based system can be combined with or replace any other resistance mechanism described herein to control the horizontal rotation resistance. **Fig. 41** is a perspective view from the top lateral side of the exercise device **700.** This embodiment **700** includes the user platform **746** (with or without the ski module or snowboard module) mounted on top of the vertical pivots **744** that are installed on each side of the cross-bar section of support post **740.** The support post **740** is mounted on top of the horizontal support mount **752** and includes central horizontal pivots **742.** The tilt or pivot of the user platform **746** is guided by the linkage system that includes top plate **760,** bottom plate **764,** vertical bar and/or telescopic tube **767** and all other elements of the linkage system described in the embodiment **300** above. **Fig. 42** is a perspective view from the top lateral side of the exercise device **700** described in **Fig.41** but with the ski module attached to the user platform **746.** **Fig. 43** is a view of the exercise device **700** from the bottom.

The alternator-based horizontal rotation resistance system in the embodiment of the exercise device **700** consists of the central pulley or sprocket **711** at the bottom of the support post **740.** A central belt or chain**712** connects the central pulley or sprocket **711** to the gear pulley or sprocket **714** that is mounted on the gear mounting member **709.** The gear carrier post **713** connects the gear pulley or sprocket **714** to the drive pulley or sprocket **715** underneath it and to planetary pulley or sprocket **716** underneath the drive pulley or sprocket **715.** The planetary pulley or sprocket **716** includes a standard planetary or other gear system (not shown) that causes that pulley to spin in the opposite direction to the rotation of the gear carrier post **713.** As a result, as gear pulley or sprocket **714** spins in one direction, the drive pulley or sprocket **715** spins in the same direction and the planetary pulley or sprocket **716** spins in the opposite direction. The planetary pully or sprocket **716** is connected by bottom alternator belt or chain **718** to the bottom alternator pulley **707** (as seen on **Fig.43****).** The drive pulley or sprocket **715** is connected by the top alternator belt or chain **717** to top alternator pulley or sprocket (not shown), which sits directly on top of the bottom alternator pulley or sprocket **707.** Both the top and bottom alternator pulleys or sprockets are exactly the same in their shape or form and are referenced as the alternator pulleys or sprockets **707** herein. The alternator pulleys or sprockets **707** are threaded through the shaft **706** of the alternator **705.** These alternator pulleys or sprockets **707** incorporate clutch bearings that allow the alternator pulleys or sprockets **707** to engage the alternator shaft **706** only when the alternator pulleys or sprockets **707** are rotated in one direction (e.g. clockwise). If the alternator pulleys or sprockets **707** are rotated in the other direction (i.e. counterclockwise), the clutch bearings overrun and cause the alternator pulleys or sprockets **707** to spin freely and therefore do not engage the alternator shaft **706.** The alternator **705** is mounted on the alternator mounting members **708.**

When the user platform **746** and support post **740** turn clockwise, the central pulley or sprocket **711** also turns clockwise and causes the drive pulley or sprocket **715** to turn clockwise. The drive pulley or sprocket **715** causes the top alternator pulley or sprocket **707** to turn clockwise and the clutch bearing will lock with alternator shaft **706** to turn it clockwise. At the same time, the central pulley or sprocket **711** causes the planetary pulley or sprocket **716** to turn counterclockwise (i.e. in the opposite direction to the central pulley or sprocket **711)** because of the planetary or other gears reversing its direction. The planetary pulley or sprocket **716** causes the bottom alternator pulley or sprocket **707** to also turn counterclockwise (i.e. in the opposite direction to the central pulley or sprocket **711)** and the clutch bearing overrun and cause the bottom alternator pulley or sprocket **707** to spin freely without engaging the alternator shaft **706.** When the user platform turns counterclockwise, the central pulley or sprocket **711** also turns counterclockwise and causes the drive pulley or sprocket **715** to turn counterclockwise. The drive pulley or sprocket **715** causes the top alternator pulley or sprocket **707** to also turn counterclockwise and the clutch bearing will overrun and cause the top alternator pulley or sprocket **707** to spin freely without engaging the alternator shaft **706.** At the same time, the central pulley or sprocket **711** causes the planetary pulley or sprocket **716** to turn clockwise (i.e. in the opposite direction to the central pulley or sprocket **711).** The planetary pulley or sprocket **716** causes the bottom alternator pulley or sprocket **707** to also turn clockwise and the clutch bearing will lock with alternator shaft **706** to turn it clockwise. Thus, the torque will continue transmitting to the alternator shaft **706** only in one (clockwise) direction.

The alternator **705** serves as a break on rotation of the alternator shaft **706.** The alternator-based horizontal rotation resistance system includes a load resister means that is connected to the alternator means for purposes of absorbing the electrical energy output of the alternator. It also includes a control panel with a plurality of computer control programs that allow the user to change the level of resistance applicable to the alternator shaft **706,** thus creating a dynamic electronic resistance on the rotation of the user platform.

The degree of lateral tilt or pivot of the user platform around the horizontal **A-A** axis and horizontal rotation resistance of such user platform when it is rotated or pivoted around vertical **B-B** axis can be adjustable electronically in any embodiment of the device **100** through to **700.** In particular, the lateral tilt or pivot of such user platform around the horizontal **A-A** axis could be adjusted by an electronic motor or electronically controlled hydraulic mechanism. Additionally, horizontal rotation resistance of such user platform could be adjusted by an electronic system that progressively activates brakes applied to horizontal rotation, or by dampers that adjust electronically, or by actuators that electronically change the position of the dampers and thus alter their resistance.

### Safety rails, handles, bars or poles

Any embodiment of the device **100** through to **700** may include safety rails, handles, bars or poles, which could be removable or adjustable. Such safety rails, handles, bars or poles can be stationary attached to any part of the device **100** through to **700,** including the base (described as **250, 350, 450, 550** or **650** on the drawings included herein) or horizontal support mount (described as **252, 352, 452, 552,** or **652** on the drawings included herein). Safety rails, handles, bars or poles can also be attached to any horizontally rotating part of the device so that they rotate horizontally around **B-B** axis with a user of the device and user platform. For example, safety rails, handles, bars or poles can be attached to the mounting arms (described as **254, 354, 454, 554,** or **654** on the drawings included herein) or directly to support post (described as **240, 340, 440, 540,** or **640** on the drawings included herein). The safety rails, handles, bars or poles may incorporate controls or buttons (not shown) for gaming to control the video games or other electronic interfaces with the device, as further described herein. The safety rails, handles, bars or poles may be positioned along the exercise device for snowboarding stance or perpendicular to the exercise device for skiing stance. In addition, the safety rails, handles, bars or poles may be used to attach a harness that would assist the user with balancing on the device (not shown).

The device may also include an electronic control panel or touch screen to control the degree of lateral tilt or pivot and horizontal rotation resistance. This can be done by choosing the appropriate levels or by selecting preprogrammed modes that would automatically adjust the level of tilt and resistance throughout the ride and during the chosen exercise time. The panel would also have standard indicators such as time, calories lost, level of resistance and tilt etc.

Each of embodiments of the device **100** through to **700** can be transformed into a gaming controller device by fitting it with motion sensors, potentiometers, accelerometers, strain gauges, weight sensor, pressure sensors or other electronic instruments. These instruments can be attached to or incorporated in any part of the device **100** through to **700** (including under or within the foot pads, on or within the user frame or base of the devise, on or inside the support post etc.) and can capture the athlete's body movements, level of intensity, changes in the rate of motion, weight transfer and balance and transform them into electronic signals that can control video games and transmit them on a video panel, monitor or Virtual Reality glasses.

Each embodiment of the exercise device described herein creates "carving" simulation through the combination of lateral tilt or vertical pivot (to simulate "edging" motion, i.e., hill to toe movement used in snowboarding or pronation and supination movement used in alpine skiing) and horizontal rotation movement. It uses a synergistic balance of resistance elements, (e.g., dampening piston struts, springs or other dampening means described herein) and pivot points between the base, the support post and user platform to create a smooth, realistic simulation of the real world movements in motion sport activities.

Broadly, the exercise device of this invention allows recreational athletes to engage in an intense cardio and muscle-building activity. Users exercise their lateral abdominal, lower back and leg muscles by making broad left and right turns with their torso. In addition, they can control the tilt of the user platform and the resistance level of their turns. As the angle of tilt increases, the machine naturally forces the users into a position that automatically engages their core, quads, glutes, and hamstring and calve muscles. By increasing the level of turn resistance, athletes can amplify the level of intensity of the workout. The users can also change their stance on the user platform, for example from a snowboarding stance, to a surfing stance or skiing stance. This adds variation to the exercise keeping the user engaged for a longer period of time, making the exercise less boring and allows the user to target the muscle groups from different angles. Custom designed exercise routines and or programs can be created for the athletes that utilize the unique movements produced by the exercise device to train the upper body muscles, including chest, shoulder and triceps muscles. As a result, the machine offers an exhausting full body workout to recreational users.

Other users engaged in motion sports, such as skiing, snowboarding, surfing, skateboarding, water skiing, wakeboarding or kite boarding can reap tremendous benefits from the exercise device of this invention. There are few athletes that have daily access to training in these sports, typically requiring travel to warmer or colder destinations. The cost of travel and hotel expenses and daily job commitments prevent most motion sport enthusiasts from engaging in these activities more than once or twice per year. Even those, who can indulge in motion sports more often, are constrained by shorter seasons and unpredictable weather patterns. As a result, many recreational participants engage in these sports without proper conditioning and spend most of their trip on dealing with muscle soreness and discomfort.

The exercise device simulates the movements produced by motion sport athletes and is designed to provide a workout that maintains muscle conditioning, improves balance, stability and endurance that are necessary for motion sports. In any embodiment of the exercise, by changing the position of foot mounts on the user platform or board, the user can select the stance that corresponds to the applicable motion sport. They can attach the foot mounts along the horizontal **A-A** axis in parallel, "duck" or other stance that is customary used on snowboarding, skateboarding, wakeboarding or kite boarding (see **Figs. 6C-6E****).** Or they can move the foot mounts further apart and attach them on an angle that produces the required stance for surfing (see **Fig. 6B****).** Alternatively, the athletes can attach the foot mounts to one end of the machine while facing the other end to replicate downhill skiing or water skiing position (see **Fig. 6A****).**

### Figs. 44-48

The embodiment **800** represents any two devices **100** through to **700** mounted on a common mounting base, side by side in parallel. In this embodiment the user can place one foot on the user platform of one device and the other foot on the user platform of the second device and operate each user platform independently so that one user platform will serve as an individual "ski" for one foot and the other user platform will as an individual ski for the second foot.

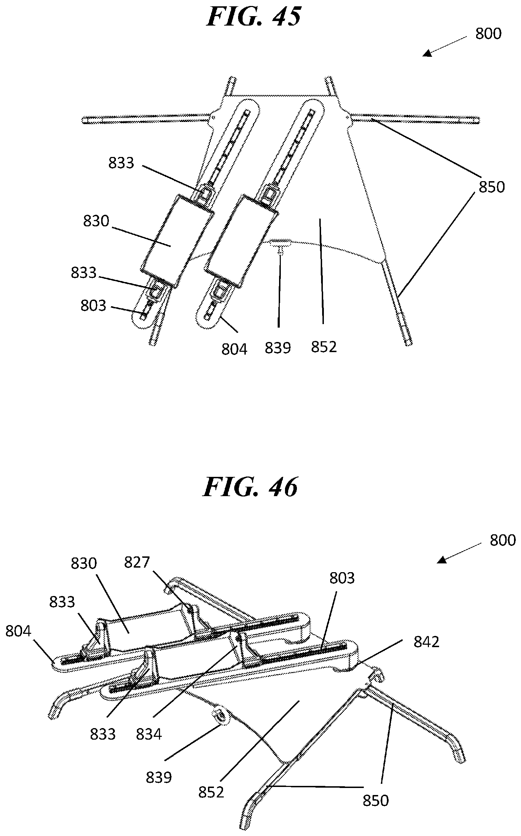

One example such paired device **800** is shown on **Fig. 44** and it consists of two side by side, parallel devices with guided tilt mechanisms and ski attachments. Another example is shown on **Figs. 45 - 48** and consists of two paired parallel devices with ski attachments and without the guiding tilt mechanism. **Fig. 45** is a top view of the exercise device **800.** The exercise device **800** includes a base **850** with a horizontal support mount **852** to accommodate various mounting means for the support post **840.** The support post **840** consists of a vertical column with the horizontal cross bar section mounted on top of it. The support post **840** that is attached to the base of the machine by way of mounting its horizontal cross bar section on top of the central horizontal pivot **842,** which is mounted on top of the support mount **852.** The support plates **804** are mounted on the support post **840.** Similar to **Fig. 27****,** the linear bearings **828** and rails **803** are mounted on the support plates **804.** Foot mounts **830** in the form of cradles with mounting members **834** that are suspended above support plates **804.** The mounting members **834** (and therefore the foot mounts **830)** and are pivotally attached on pivots **827** to vertical supports **833.** The vertical supports **833** are mounted on the linear bearings **828** that slide horizontally on tracks or rails **803.** The foot mounts **830** pivot vertically on pivots **827.** The linear bearings **828** create horizontal movement of foot mounts **830** back and forth along the tracks or rails **803.**

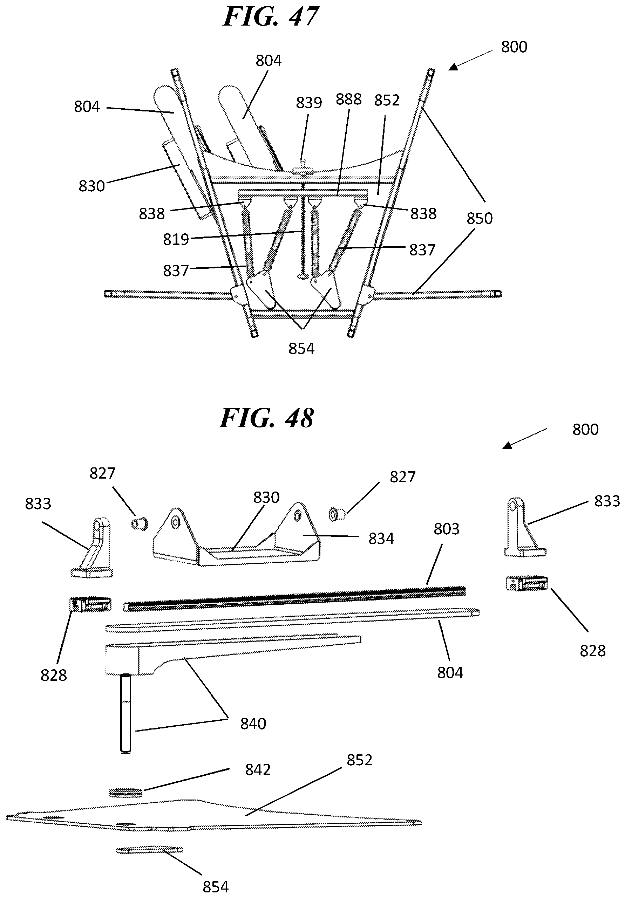

**Fig. 46** is a lateral top view of the paired device **800** and **Fig. 47** is a bottom view. A plurality of adjustable resistance elements **837** are mounted to the support post **840** to control the level of resistance, velocity and angle of pivot of support plates **804** (and therefore of the foot mounts **830)** in the horizontal plane around the vertical axis **B-B.** Each horizontal resistance spring **837** is attached at one end to mounting arms **854** that co-act with the support post 840. The other end of the horizontal resistance springs **837** is mounted to the resistance bar **888** by way of mounting members 838. In the embodiment depicted in **Figs 44-48****,** there are four resistance elements **837** that are adjustable to further control the level or resistance, velocity and angle of pivot of the support plates **804** (and therefore of the foot mounts **830)** in the horizontal plane around the vertical axis **B-B.** A dampening piston strut (not shown) can also be attached on one side to the mounting arms **854** and on the other side to the base **850.** Both the dampening piston strut and horizontal resistance springs **837** create resistance and control in the rotation of the support post **840** to control the horizontal pivoting of the support plates **804** (and therefore of the foot mounts **830)** around the vertical axis **B-B.** The degree of resistance of the horizontal resistance springs **237** can be adjusted by extending or contracting the length of the springs by various means, including by the lead screw **819** and spring adjuster **839.**

Other types of resistance mechanisms (not shown) can also be used create resistance for horizontal rotation of the support plates **804** (and therefore of the foot mounts **830)** around the vertical axis **B-B.** These mechanisms may include spring resistance mechanisms, rotary or linear dampers of various types (including magnetic, magnetic fluid, hydraulic, gas or spring), rubber band resistance, alternators, flywheel with various types of resistance (including magnetic, hydraulic, felt pad or other pads). These resistance mechanisms can be connected between the base **850** or horizontal support mount **852** and the mounting arms **854** that are pivoting together with the support post **840** and support plates **804.** The mounting arms **854** are attached to the support post **840.** These mounting arms can be of various shapes and may include holes or slits.

Similar to **Fig. 28****,** when the support plates **804** pivot or rotate, the foot mounts **830** also rotate horizontally around the vertical axis **B-B** and around the central horizontal pivot **842.** In addition, the foot mounts **830** also tilt of pivot vertically around the horizontal axis **A-A** and around the pivots **827,** thus enhancing the simulation of edging of skis (i.e. pronation and supination movement in alpine skiing). In addition, the foot mounts **830** moves horizontally back and forth along rails or tracks **803.** There may be springs, dampers or other resistance mechanism installed along the rails or tracks **803,** for example between the support plates **804** and vertical supports **833.** These resistance mechanisms will create resistance to horizontal movements of foot mounts **830** along the rails or tracks **803.** In addition to pronation and supination pivotal movement of foot mounts **830,** this horizontal back and forth movement of foot mounts **830** along the rails or tracks **803** creates even more realistic ski sensation because it allows users to put more weight on the outside leg when rotating the user platform (i.e., lateral weight distribution) and shift the inside leg forward to always keep the toes in a line that is parallel to user's shoulders throughout the turn. Alternatively, the foot mounts **830** for ski position may be linked through a system of bars, cables or other linkages (not shown) to other parts of the device in a way that would make them automatically move back and forth in a horizontal plane as support plates **804** rotate around the vertical axis **B-B.** Additionally, the foot mounts **830** for ski position may incorporate a removable heel ramp (not shown) that can be placed under the each support plate **804** on its heel side to lift up the user's heels and further simulate a downhill ski slope.

**Fig. 48** is an exploded perspective view of the support post **840,** foot mounts **830,** central pivot support **842** and other relevant parts of this embodiment **800.** As in other embodiments, the support post **840** consists of a vertical column with a cross bar section mounted on top of it. The central pivot **842** is represented by a donut bearing and the vertical column section of the support post **840** is threaded through the center of the central pivot **842.** The outside ring of the central pivot **842** donut bearing is mounted to the horizontal cross bar section of the support post **840.** The inside ring of the central pivot **842** donut bearing is mounted to the horizontal support mount 852, which in turn is mounted to the base **850.** The mounting arms **854** that are attached to the bottom of that vertical column after it is threaded through the center of the central pivot **842.**

Optionally, mounting arms **854** and/or the base **850** may be used to attach various other components to the exercise device, such as handle bars, a harness to assist the user with balancing on the device, amortization shock absorbers or rotation stoppers to soften or limit horizontal rotation of the support plates **804** at extreme points.

For alpine sports enthusiasts, the lateral and rotational movements of the machine simulate the motion, whereas adjustments to the tilt and level of rotational resistance simulate the steepness of the hill and level of intensity. The users are able to use their body movement to control the width and angle of each turn.

A number of medical conditions and neurological disorders, such as Vertigo or Parkinson disease, multiple sclerosis or stroke may cause patients to experience some difficulty with balance or produce spinning sensation and thus put patients at risk of falling, affect their quality of life and interfere with their level of activity. The device can be used to introduce balance re-training into the therapy program. The motion of swaying and turning on the machine helps patients to gain better control of their body and reduce risk of falls. By gradually increasing the tilt and resistance of the machine, patients can further improve their balance, coordination, concentration, strength and reflexes.

Physical therapists or doctors can incorporate the machine into their treatment plans that aim to improve strength, flexibility and range of motion of people who suffered from knee and ankle injuries or are recovering from injuries to their quads, glutes, and hamstrings or calve muscles and therefore require balance and strength exercises to get back in shape. The device allows to reduce joint and muscle impairments and increase joint and muscle mobility and function.

The most difficult obstacles to the continuing usage of any exercise equipment are boredom and repetitiveness. Introducing fun into any fitness activity can remove these obstacles and motivate the athletes to engage in physical exercise. The exercise device of this invention can be used as a gaming controller that, when connected to a computer and video panel, monitor or Virtual Reality glasses, would allow users to transform their motions into electronic signals that control video games. The exercise device users will be able to combine their workouts with different video games, such as hover board races, skateboard contests, air fights, alpine or water sports races and obstacle runs. The users could choose levels depending on their fitness ability and engage in simulated skiing, snowboarding, skateboarding, wakeboarding, water skiing, kite boarding or surfboarding through various obstacles and terrains on video screens. Video games can provide athletes with instant visual feedback on their movements and improve their concentration, strength and reflexes. The video games combined with this exercise device can serve as strong drivers to motivate people to be more active and improve their fitness. In addition to a single mode, the exercise device will have capabilities to operate in a multiplayer mode or in a social competition mode that would allow athletes to compete with each other or other people online. Thus, exercise device will remove the strain of physical activity from athletes' conscience and allow them to exercise longer and more often. Additionally, the exercise device can be combined with video classes and specific exercise programs of various degrees of difficulty in order to enhance user experience. Such classes or programs can be either streamed live or downloaded and viewed on a video panel, monitor or Virtual Reality glasses.

The invention has been described with reference to various specific and illustrative aspects of the present invention and techniques. However, it should be understood that many variations and modifications may be made while remaining within the scope of the invention The invention is defined by the appended claims.

### ELEMENTS

### Figs. 1-7

| **Part No.** | **Element** |
|---|---|
| **100** | Exercise device |
| **110** | User |
| **120** | Board on top of the user platform **146** |
| **130** | Foot mounts for foot placement positions on board **120.** Alternatively, the foot mounts can be mounted directly on top of the user platform (when the device is used without any board **120** placed on top of the user platform **146).** |
| **146** | user platform mounted on top of support post (not shown). |
| **150** | Base (on ground). |
| **A-A** | Horizontal axis |
| **B-B** | Vertical axis |
| **180** | Sensors for gaming, physical data, motion data, which can be placed on the user platform **146,** user board **120,** support post or other parts of the device. |
| **181** | CPU - Game console - tablet - Virtual Reality glasses - computer - wired or wireless |
| **182** | Video monitor for viewing |

### Figs. 8-16

| **Part No.** | **Element** |
|---|---|
| **200** | Exercise device |
| **219** | Lead screw |
| **221** | Vertical resistance springs that create resistance for lateral tilt or pivot of the user platform **246** around the horizontal **A-A** axis. |
| **222** | Hex drive screw |
| **223** | Washer |
| **224** | Main shaft used for purposes of mounting the outer tube of the vertical column section of the support post **240** |
| **225** | Vertical column section of the support post **240** |
| **230** | Foot mounts |
| **237** | Horizontal resistance springs to modulate horizontal rotational movements of user platform **246** around the vertical axis **B-B** |
| **238** | Mounting members that attach horizontal resistance springs **237** to the base **250** (as in **Figs. 8-11****)** or that are sliding along the lead screw **219** (as in **Figs. 12-16****)** |
| **239** | Spring adjuster (including a crank with lead screw or other mechanism) adjusting the length of horizontal resistance springs **237** |
| **240** | Support post - interface between base **250** and user platform **246.** The support post **240** consists of a vertical column section and horizontal cross bar section mounted on top of the vertical column section. The support post **240** rotates in the horizontal plane around the vertical axis **B-B** by means of the central horizontal pivot **242.** The support post **240** and central horizontal pivot **242** are mounted on horizontal support mount **252** or they can be mounted directly on base **250.** |
| **242** | Central horizontal pivot that creates rotation of the support post **240** (and of the user platform **246** attached to it) in horizontal plane around the vertical axis **B-B.** The central pivot can be located either below or inside the vertical column section of the support post **240** or between the horizontal cross bar section and vertical column section of the support post **240.** |
| **244** | Vertical pivots that create lateral tilt or pivot of the user platform **246** around the horizontal axis **A-A.** |
| **245** | Vertical bars mounted on the vertical pivots **244.** The user platform **246** is attached to these vertical bars. |
| **246** | User platform |
| **248** | Dampening piston struts-dampers to modulate horizontal rotational movements of user platform **246** around the vertical axis **B-B** |
| **250** | Base to which horizontal support mount **252,** support post **240** and associated other parts above are mounted. The base may include wheels on one side for transport & storage. |
| **252** | Horizontal support mount for the support post **240** & associated other parts above |
| **254** | Mounting arms with holes or slits to attach dampers **248** or springs, elastic bands, or other types of resistance as further described herein to control resistance of horizontal movement of the device around the vertical **B-B** axis. The mounting arms can also be used to attach safety rails, handles, bars or poles. |
| **283** | Potentiometer on top of the support post **240** or on top of the connection that connects the support post **240** to central horizontal pivot **242** |
| **285** | Vertical column connector |
| **286** | Cross bar connector plate |
| **287** | Vertical pivot connector plates |

### Figs. 17-30

| **Part No.** | **Element** |
|---|---|
| **300** | Exercise device |
| **303** | Rails that are used in conjunction with the linear bearings **328** that allow the foot mounts **330** to slide horizontally |
| **304** | Support plates that are used for purposes of mounting the linear bearings **328,** rails **303** and foot mounts **330.** |
| **324** | Main shaft used for purposes of mounting the outer tube of the vertical column section of the support post **340** (as described in **Fig. 11a****).** Alternatively, the vertical column section of the support post **340** can be pressed into the central point **340** consisting of a donut bearing (as described in **Fig. 11b****)** |
| **326** | Slit along the middle of bottom plate **364** |
| **327** | Pivots that are used to attach the foot mounts **330** to vertical supports **333** of the ski module |
| **328** | Linear bearings that slide horizontally on rails **303.** Foot mounts **330** are attached to vertical supports **333** that are mounted on the linear bearings. |
| **329** | Cap at the bottom of the quick release skewer lock **356.** The cap secures a cone shaped tapered bearing 359. |
| **330** | Foot mounts |
| **331** | Ski foot base |
| **333** | Vertical supports that are used to attach cradles with foot mounts **330** |
| **334** | Mounting members that together with foot mounts **330** form cradles that are part of the ski module or snowboard module. |
| **337** | Horizontal resistance springs to modulate horizontal rotational movements of user platform **346** around the vertical axis **B-B** |
| **338** | Mounting members that attach horizontal resistance springs **337** to the base **350** (as in **Figs. 8-11****)** or that are sliding along a lead screw (not shown) similar to the sliding mounting members **238** that are sliding along the lead screw **219** in **Figs. 12-16** |
| **339** | Spring adjuster (including a crank with lead screw or other mechanism) adjusting the length of horizontal resistance springs **337** |
| **340** | Support post - interface between base **350** and user platform **346.** The support post **340** consists of a vertical column section and horizontal cross bar section mounted on top of the vertical column section. The support post **340** rotates in the horizontal plane around the vertical axis **B-B** by means of the central horizontal pivot **340.** The support post **340** and central horizontal pivot **342** under it are mounted on horizontal support mount **352** or they can be mounted directly on base **350.** |
| **342** | Central horizontal pivot - creates rotation of the support post **340** (and user platform **346** attached to it) in horizontal plane around the vertical axis **B-B.** The central pivot can be located either below or inside the vertical column section of the support post **340** or between the cross bar and vertical column sections of the support post **340.** |
| **344** | Vertical pivots- creates lateral tilt or pivot of the user platform **346** around the horizontal **A-A** axis |
| **346** | User platform |
| **348** | Dampening piston struts-dampers to modulate horizontal rotational movements of user platform **346** around the vertical axis **B-B** |
| **350** | Base to which horizontal support mount **352,** support post **340** and associated other parts above are mounted. The base may include wheels on one side for transport & storage. |
| **352** | Horizontal support mount for the support post **340** & associated other parts above |
| **354** | Mounting arms with holes or slits to attach dampers springs, elastic bands, or other types of resistance as further described herein to control resistance of horizontal movement of the device around the vertical **B-B** axis. The mounting arms can also be used to attach safety rails, handles, bars or poles. |
| **355** | Metered board with recessed cone-shaped holes designed for housing the quick release skewer lock **356** |
| **356** | Quick release skewer lock |
| **357** | Bushing included within the shuttle with flanges **358** to reduce the freedom of movement of the pin of the quick release skewer lock **356.** |
| **358** | Shuttle with flanges that travels within the slit **370** along the middle of the top plate **360.** |
| **359** | Tapered bearing that travels within the slit **326** along the middle of the bottom plate **364** |
| **360** | Top plate that includes mounting arms **354,** elongated section with slit **370** along the middle and a semi-circular slit **368** |
| **362** | A knob with roller pin that travels through slit **370** and through slit **326** along the middle of the top plate **360** and bottom plate **364** |
| **364** | Bottom plate with a slit **326** along the middle of that plate |
| **365** | Two posts attached at the end of the bottom plate **364** with a horizontal bar **366** connecting the two posts **365** |
| **366** | Horizontal bar attached between the two posts **365** and connected to vertical bar and/or telescopic tube **367** |
| **367** | vertical bar and/or telescopic tube that connects the user platform **346** to the horizontal bar **366** and bottom plate **364** |
| **368** | Semi-circular slit in the top plate **360** |
| **369** | Pivot post attached to support base **374.** Bottom plate **364** (located under the top late **360)** is attached to and rotates around the pivot post **369** |
| **370** | Slit along the middle of the elongated section of top plate **360** |
| **371** | Supporting roller is installed at the end of bottom plate **364** to support it when it rotates around the pivot post **369.** The supporting roller rolls on top of the horizontal roller plate **373** in semi-circular motion. |
| **373** | Horizontal roller plate |
| **374** | Support base that supports one end of the bottom plate **364.** Pivot post **369** is attached to the support base **374** |
| **375** | Loop with bearing at the bottom of the vertical bar and/or telescopic tube **367.** Horizontal bar **366** is threaded through the loop with bearing **375** |
| **383** | Potentiometer on top of the support post **340** or on top of the connection that connects the support post **340** to central horizontal pivot **342** |
| **386** | Cross bar connector plate |
| **387** | Vertical pivot connector plates |

### Figs. 31-34

| **Part No.** | **Element** |
|---|---|
| **400** | Exercise device |
| **430** | Foot mounts |
| **440** | Support post - interface between base **450** and user platform **446.** The support post **440** consists of a vertical column section and horizontal cross bar section mounted on top of the vertical column section. The support post **440** rotates in the horizontal plane around the vertical axis **B-B** by means of the central horizontal pivot **442.** The support post **440** and central horizontal pivot **442** under it are mounted on horizontal support mount **452** or they can be mounted directly on base **450.** |
| **442** | Central horizontal pivot - creates rotation of the support post **440** (and the user platform **446** attached to it) in horizontal plane around the vertical axis **B-B.** The central pivot can be located either below or inside the vertical column section of the support post **440** or between the vertical column and cross bar sections of the support post **440.** |
| **444** | Vertical pivots- creates lateral tilt or pivot of the user platform **446** around the horizontal axis **A-A** |
| **446** | User platform |
| **450** | Base to which horizontal support mount **452,** support post **440** and associated other parts above are mounted. The base may include wheels on one side for transport & storage. |
| **452** | Horizontal support mount for the support post **440** & associated other parts above |
| **454** | Mounting arms with holes or slits to attach dampers springs, elastic bands, or other types of resistance as further described herein to control resistance of horizontal movement of the device around the vertical axis **B-B.** The mounting arms can also be used to attach safety rails, handles, bars or poles. |
| **465** | Two posts attached at the end of top plate connected with horizontal bar **466** |
| **466** | Horizontal bar attached between the two posts **465** and connected to vertical bar and/or telescopic tube **467** |
| **467** | Vertical bar and/or telescopic tube that connects the user platform **446** to the horizontal bar **466** and plate **476** |
| **475** | Loop with bearing at the bottom of vertical bar and/or telescopic tube **467.** Horizontal bar **466** is threaded through the loop with bearing **475** |
| **476** | Plate that rotates around the vertical pin or bolt **479** and connected on one side to mounting arms **454** or to the support post **440** and on the other side to vertical bar and/or telescopic tube **467.** Plate **476** may have a roller at the bottom to support it when it rotates around vertical pin or bolt **479.** |
| **477** | Horizontal bar connecting plate **476** to mounting arms **454** or to the support post **440.** Horizontal bar may also be used to connect plate **776** to vertical bar and/or telescopic tube **467** and user platform **446** (as in **Figs. 32-34****).** |
| **478** | Slit on plate **476** along which the horizontal bar **477** moves once it is shifted along the openings or slit in the mounting arms **454** |
| **479** | Vertical pin or bolt that attaches plate **476** to the base **452** or directly to platform **450.** Plate **476** pivots around the vertical pin or bolt **479.** |

### Figs. 35-38

| **Part No.** | **Element** |
|---|---|
| **500** | Exercise device |
| **530** | Foot mounts |
| **540** | Support post - interface between base **550** and user platform **546.** The support post **540** consists of a vertical column section and horizontal cross bar section mounted on top of the vertical column section. The support post **540** rotates in the horizontal plane around the vertical axis **B-B** by means of the central horizontal pivot **542.** The support post **540** and central horizontal pivot **542** under it (eg as shown on **Fig.36****)** are mounted on horizontal support mount **552** or they can be mounted directly on base **550.** |
| **542** | Central horizontal pivot - creates rotation of the support post **540** (and user platform **546** attached to it) in horizontal plane around the vertical axis **B-B.** The central pivot can be located either below or inside the vertical column section of the support post **540** or between the cross bar and vertical column sections of the support post **540.** |
| **544** | Vertical pivots- create lateral tilt or pivot of the user platform **546** around the horizontal **A-A** axis |
| **546** | User platform |
| **550** | Base to which horizontal support mount **552,** support post **540** and associated other parts above are mounted. The base may include wheels on one side for transport & storage. |
| **551** | Transverse mounting plates (as shown on **Fig.38****)** attached to base **550** (for purposes of attaching the fixed vertical support plates **595)** |
| **552** | Horizontal support mount for the support post **540** & associated other parts above |
| **554** | Mounting arms with holes or slits to attach dampers (not shown on **Figs 35-38** but similar to dampers **248** or **348** shown herein) springs, elastic bands, or other types of resistance as further described herein to control resistance of horizontal movement of the device around the vertical **B-B** axis. The mounting arms can also be used to attach safety rails, handles, bars or poles. |
| **590** | Arc guide ramps, rails or tracks for transverse rotational movements |
| **591** | Horizontal cross-piece (as shown on **Fig.38****)** connecting the two arc guide ramps, rails or tracks **590** into a unified structural element |
| **592** | Bearing wheels (rollers) mounted to **546** for effecting transverse rotational movements |
| **593** | Pivoting linkage arms (as shown on **Fig.38****)** attached to the outer edges of arc guide ramps, rails or tracks **590** |
| **594** | Lever arms (to effect an up & down vertical movement for the arc guide ramps, rails or tracks **590)** |
| **595** | Fixed vertical support plates for purposes of installing the pivoting linkage arms **593** |
| **596** | Pivots for lever arms **594** |
| **597** | Upper pivot point for the relationship between pivoting linkage arms **593** and fixed vertical support plates **595** |
| **598** | Mounting member for the lever arms **594** and pivots **596** |
| **599** | Slit at the bottom of fixed vertical support plates **595** limiting means for the travel of pivoting linkage arms **593** |

### Figs. 39 through 40

| **Part No.** | **Element** |
|---|---|
| **600** | Exercise device |
| **630** | Foot mounts |
| **640** | Support post - interface between base **650** and user platform **646.** The support post rotates in various directions (including in the horizontal plane around the vertical axis **B-B** and vertical plane around the horizontal axis **A-A)** by means of the spherical bearing/ball joint **684.** The support post **640** is mounted on the horizontal support mount **652** or it can be mounted directly on base **650.** |
| **646** | User platform |
| **650** | Base to which horizontal support mount **652,** support post **640** and associated other parts above are mounted |
| **652** | Horizontal support mount for the support post **640** & associated other parts above |
| **654** | Mounting arms with holes or slits to attach dampers (not shown on **Figs. 41-42** but similar to dampers **248** and **348** shown on **Figs. 8-30**) springs, elastic bands, or other types of resistance as further described herein to control resistance of horizontal movement of the device around the vertical **B-B** axis. The mounting arms can also be used to attach safety rails, handles, bars or poles. |
| **660** | Top plate that includes mounting arms **654** and elongated section with slit in the middle and a semi-circular slit (not shown) |
| **662** | A knob with roller pin that travels through slits along the middle of the top plate **660** and bottom plate **664** |
| **664** | Bottom plate with a slit along the middle of that plate (not shown). Bottom plate **664** is located under the top late **660** is attached to and rotates around the pivot post (not shown) that is connected to the support base **674.** |
| **665** | Two posts attached at the end of the top late **660** with a connection bar **666** |
| **666** | Horizontal bar attached between the two posts **665** and connected to vertical bar / telescopic tube **667** through the loop with bearing **675.** |
| **667** | Vertical bar and/or telescopic tube that connects the user platform **646** to the bottom plate **664** through the horizontal bar **666.** |
| **674** | Support base that supports one end of the bottom plate **664.** A pivot post (not shown but similar to e.g. the pivot post **369** on **Fig. 26****)** is attached to the support base **374** |
| **675** | Loop with bearing at the bottom of vertical bar and/or telescopic tube **667.** Horizontal bar **666** is threaded through loop with bearing **675** |
| **684** | Spherical bearing/ball joint installed between the support post **640** and the user platform **646.** The spherical bearing/ball joint **684** can also be installed between the support post **640** and the horizontal support mount **652** or base **650.** |

### Figs. 41-43

| **Part No.** | **Element** |
|---|---|
| **700** | Exercise device |
| **703** | Rails or tracks that are used in conjunction with the linear bearings **728** that allow the foot mounts **730** to slide horizontally |
| **704** | Support plates that are used for purposes of mounting the linear bearings **728,** rails **703** and foot mounts **730.** |
| **705** | Alternator |
| **706** | Alternator shaft |
| **707** | Top and bottom alternator pulleys or sprockets |
| **708** | Alternator mounting members |
| **709** | Gear mounting member |
| **711** | Central pulley or sprocket |
| **712** | Central belt or chain |
| **713** | Gear carrier post |
| **714** | Gear pulley or sprocket |
| **715** | Drive pulley or sprocket |
| **716** | Planetary pulley or sprocket |
| **717** | Top alternator belt or chain |
| **718** | Bottom alternator belt or chain |
| **726** | Slit along the middle of bottom plate **764** |
| **727** | Pivots that are used to attach the foot mounts **730** to vertical supports **733** of the ski module |
| **728** | Linear bearings that slide horizontally on rails or tracks **703.** Foot mounts **730** are attached to vertical supports **733** that are mounted on the linier bearings **728.** |
| **730** | Foot mounts |
| **731** | Ski foot base |
| **733** | Vertical supports that are used to attach foot mounts **730** |
| **734** | Mounting members that together with foot mounts **730** form cradles that are part of the ski module. |
| **740** | Support post - interface between base **750** and user platform **746.** The support post **740** consists of a vertical column section and horizontal cross bar section mounted on top of the vertical column section. The support post rotates in the horizontal plane around the vertical axis **B-B** by means of the central horizontal pivot **742.** The support post and central horizontal pivot **742** under it are mounted on horizontal support mount **752** or they can be mounted directly on base **750.** |
| **742** | Central horizontal pivot - creates rotation of the support post **740** (and of the user platform **746** attached to it) in horizontal plane around the vertical axis **B-B.** The central pivot can be located either below or inside the vertical column section of the support post **740** or between the cross bar and vertical column sections of the support post **740.** |
| **744** | Vertical pivots- create lateral tilt or pivot of the user platform **746** around the horizontal axis **A-A** |
| **746** | User platform |
| **750** | Base to which horizontal support mount **752,** support post **740** and associated other parts above are mounted. The base may include wheels on one side for transport & storage. |
| **752** | Horizontal support mount for the support post **740** & associated other parts above |
| **754** | Mounting arms. The mounting arms **754** can be used to attach safety rails, handles, bars or poles. |
| **760** | Top plate that includes mounting arms **754** and elongated section with slit **770** along the middle and a semi-circular slit (not shown) |
| **762** | A knob with roller pin that travels through slit **770** and through slit **726** along the middle of the top plate **760** and bottom plate **764** respectively |
| **764** | Bottom plate with a slit **726** along the middle of that plate. The bottom plate **764** is supported on one end by the support base with the pivot post (not shown but similar to the support base **374** and pivot post **369** described herein). The bottom plate **764** is supported on the other end by the supporting roller **771.** The bottom plate **764** rotates around the pivot post (not shown but similar to the pivot post **369** described herein). |
| **765** | Two posts attached at the end of the bottom plate **764** with a horizontal bar **766** connecting the two posts 765 |
| **766** | Horizontal bar attached between the two posts **765** and connected to vertical bar and/or telescopic tube 767 |
| **767** | Vertical bar and/or telescopic tube that connects the user platform **746** to the horizontal bar **766** and bottom plate **764** |
| **770** | Slit along the middle of the elongated section of top plate **760** |
| **771** | Supporting roller installed at the end of bottom plate **764** to support it when it rotates around the pivot post (not shown but similar to the pivot post **369** described herein). The supporting roller rolls on top of the horizontal roller plate **773** in semi-circular motion. |
| **773** | Horizontal roller plate |
| **775** | Loop with bearing at the bottom of the vertical bar and/or telescopic tube **767.** The horizontal bar **766** is threaded through the loop with bearing **775** |
| **783** | Potentiometer on top of the support post **740** or on top of the connection that connects the support post **740** to central horizontal pivot **742** |

### Figs. 44-48

| **Part No.** | **Element** |
|---|---|
| **800** | Exercise device |
| **803** | Rails that are used in conjunction with the linear bearings **828** that allow the foot mounts **830** to slide horizontally |
| **804** | Support plates that are used for purposes of mounting the linear bearings **828,** rails **803** and foot mounts **830.** |
| **819** | Lead screw |
| **827** | Pivots that are used to attach the foot mounts **830** to vertical supports **833** of the ski module |
| **328** | Linear bearings that slide horizontally on rails **803.** Foot mounts **830** are attached to vertical supports **833** that are mounted on the linier bearings. |
| **830** | Foot mounts |
| **833** | Vertical supports that are used to attach foot mounts **830** |
| **834** | Mounting members that together with foot mounts **830** form cradles that are part of the ski module |
| **837** | Horizontal resistance springs to modulate horizontal rotational movements of user platform **846** around the vertical axis **B-B** |
| **838** | Mounting members that attach horizontal resistance springs **837** to the base **850** |
| **839** | Spring adjuster (including a crank or other mechanism) adjusting the length of horizontal resistance springs **837** |
| **840** | Support post - interface between base **850** and user platform **846.** The support post **840** consists of a vertical column section and horizontal cross bar section mounted on top of the vertical column section. The support post **840** rotates in the horizontal plane around the vertical axis **B-B** by means of the central horizontal pivot **842.** The support post **840** and central horizontal pivot **842** under it are mounted on horizontal support mount **852** or they can be mounted directly on base **850.** |
| **842** | Central horizontal pivot - creates rotation of the support post **840** (and user platform **846** attached to it) in horizontal plane around the vertical axis **B-B.** The central pivot can be located either below or inside the vertical column section of the support post **842** or between the cross bar and vertical column sections of the support post **840.** |
| **844** | Vertical pivots- creates lateral tilt or pivot of the user platform **846** around the horizontal **A-A** axis |
| **846** | User platform |
| **848** | Dampening piston struts-dampers to modulate horizontal rotational movements of user platform **846** around the vertical axis **B-B** |
| **850** | Base to which horizontal support mount **852,** support post **840** and associated other parts above are mounted. The base may include wheels on one side for transport & storage. |
| **852** | Horizontal support mount for the support post **840** & associated other parts above |
| **854** | Mounting arms with holes or slits to attach dampers springs, elastic bands, or other types of resistance as further described herein to control resistance of horizontal movement of the device around the vertical **B-B** axis. The mounting arms can also be used to attach safety rails, handles, bars or poles. |
| **864** | Bottom plate with a slit along the middle of that plate (not shown) |
| **871** | Supporting roller is installed at the end of bottom plate **864** to support it when it rotates around a pivot post (not shown). The supporting roller rolls on top of the horizontal roller plate **873** in semi-circular motion. |
| **873** | Horizontal roller plate |
| **888** | Resistance connector |

## Claims

1. A multipurpose exercise device (300; 400; 500; 600; 700; 800) for replicating exercise motions for a user for a plurality of sports and physical therapy comprising:
a base (350; 450; 550; 650; 750; 850) having an upper surface and lower surface, the lower surface resting on a horizontal support surface;
a user platform (346; 446; 546; 646; 746; 846) having a lower surface and an upper surface upon which the user stands;
a support post (340; 440; 540; 640; 740; 840) having an upper section and a lower section, either the upper or the lower section of the support post (340; 440; 540; 640; 740; 840) mounted to the base (350; 450; 550; 650; 750; 850) to axially pivot on the base (350; 450; 550; 650; 750; 850), the user platform (346; 446; 546; 646; 746; 846) pivotally mounted to a section of the support post (340; 440; 540; 640; 740; 840), wherein the user platform (346; 446; 546; 646; 746; 846) pivots with the support post (340; 440; 540; 640; 740; 840) in a horizontal plane parallel to the horizontal support surface, and the user platform (346; 446; 546; 646; 746; 846) pivots on the support post (340; 440; 540; 640; 740; 840) in a vertical plane perpendicular to the horizontal support surface;
at least one resistance element (237; 705; 848) having a first end and a second end, the first end mounted to the support post (340; 440; 540; 640; 740; 840) and the second end mounted to the base (350; 450; 550; 650; 750; 850) to control the level of resistance, velocity, and angle of pivot of the user platform (346; 446; 546; 646; 746; 846) in the horizontal plane; and
a linkage system (360, 362, 364, 365, 367; 453, 467, 476, 477, 479; 590, 592; 760, 764, 767) linked between the base (350; 450; 550; 650; 750; 850) or the support post (340; 440; 540; 640; 740; 840) and the user platform (346; 446; 546; 646; 746; 846) for guiding and controlling the angle of the pivot of the user platform (346; 446; 546; 646; 746; 846) in the vertical and horizontal planes;
wherein the exercise device (300; 400; 500; 600; 700; 800) is configured such that, in use, the user places both feet on the user platform (346; 446; 546; 646; 746; 846) to pivot it in the horizontal plane and vertical plane.

2. The multipurpose exercise device of claim 1, wherein the linkage system is an adjustable linkage system for adjustably guiding and controlling the angle of the pivot of the user platform in the vertical and horizontal planes.

3. The multipurpose exercise device of claim 1 or 2, further comprising a ski module for replicating exercise motions for the user for skiing.

4. The multipurpose exercise device of claim 3, wherein the ski module has an upper surface and a lower surface, the lower surface of the ski module mounted to the user platform, the ski module comprising:
a pair of vertical supports with mounting members mounted on the upper surface of the ski module; and
a foot mount pivotally mounted between each pair of vertical supports;
wherein the exercise device is configured such that, in use, the user places a foot in each foot mount and perform motions to propel the foot mounts and user platform to pivot in the horizontal plane and in the vertical plane to thereby replicate the exercise motions for skiing.

5. The multipurpose exercise device of claim 4, wherein the vertical supports are slidably mounted on parallel tracks that are mounted on the upper surface of the ski module.

6. The multipurpose exercise device of claim 1 or 2, further comprising a snowboard module for replicating exercise motions for the user for snowboarding.

7. The multipurpose exercise device of claim 6, wherein the snowboard module has an upper surface and a lower surface, the lower surface of the snowboard module mounted to the user platform of the device, the snowboard module comprising:
a pair of vertical supports with vertical pivots mounted directly to the upper surface of the snowboard module; and
a single planar foot mount pivotally supported between the pair of vertical supports with vertical supports mounted to upper surface of the module to permit the single planar platform to pivot in a vertical plane perpendicular to the horizontal support surface;
wherein the exercise device is configured such that, in use, the user stands on the single planar foot mount and performs motions to propel the single planar foot mount and the user platform to pivot in the horizontal plane and the vertical plane to thereby replicate the exercise motions for snowboarding.

8. The multipurpose exercise device of claim 1 or 2, further comprising a removable ski module for replicating exercise motions for the user for skiing, the removable ski module has an upper surface and a lower surface, the lower surface of the removable ski module removably mounted to the user platform, the removable ski module comprising:
a pair of tracks parallel to each other, each track mounted on the upper surface of the removable ski module;
a pair of vertical supports with mounting members slidably mounted to each track; and
a foot mount pivotally mounted between each pair of vertical supports on the track;
wherein the exercise device is configured such that, in use, the user places a foot in each foot mount and performs motions a) to propel the foot mounts back and forth along the tracks, b) to propel the foot mounts and user platform to pivot in the horizontal plane, and c) to propel the foot mounts and user platform to pivot in the vertical plane to thereby replicate the exercise motions for the user for skiing.

9. The multipurpose exercise device of claim 1 or 2, further comprising a removable snowboard module for replicating exercise motions for the user for snowboarding, the removable snowboard module has an upper surface and a lower surface, the lower surface of the removable snowboard module removably mounted to the user platform of the device, the removable snowboard module comprising:
a pair of vertical supports with vertical pivots mounted directly to the upper surface of the removable snowboard module; and
a single planar platform pivotally supported between the pair of vertical supports with vertical supports mounted to upper surface of the module to permit the single planar platform to pivot in a vertical plane perpendicular to the horizontal support surface;
wherein the exercise device is configured such that, in use, the user stands on the single planar platform and performs the snowboarding exercise motions to propel the user platform to pivot in the horizontal plane and the vertical plane.

10. The multipurpose exercise device of any preceding claim, further comprising at least one dampening element having a first end and a second end, the first end mounted to the support post and the second end mounted to the base to control a level of dampening to control the velocity and angle of pivot of the user platform in the horizontal plane.

11. The multipurpose exercise device of claim 10, further comprising at least one other dampening element having a first end and a second end, the first end mounted to the user platform and the second end mounted to the base or to the support post to control the level of resistance, velocity and angle of pivot of the user platform in the vertical plane.

12. The multipurpose exercise device of any preceding claim, further comprising at least one other resistance element one resistance element having a first end and a second end, the first end mounted to the base or to the support post and the second end mounted to the user platform to control the level of resistance, velocity and angle of pivot of the user platform in the vertical plane.

13. The multipurpose exercise device of any preceding claim, wherein the user platform is in digital communication with a computer processing unit for transmitting position and motion data to the computer processing unit for processing into an interactive experience for the user.

14. The multipurpose exercise device of any preceding claim, configured to act as a gaming controller.

15. The multipurpose exercise device of claim 14, comprising one or more motion sensors, potentiometers, accelerometers, strain gauges, weight sensors, pressure sensors, or other electronic instruments, for transforming movements into electronic signals for use in gaming control.

## Patentansprüche

1. Mehrzweck-Übungsvorrichtung (300; 400; 500; 600; 700; 800) zum Replizieren von Übungsbewegungen für einen Benutzer für eine Vielzahl von Sportarten und Physiotherapie, umfassend:
eine Basis (350; 450; 550; 650; 750; 850), die eine obere Oberfläche und eine untere Oberfläche aufweist, wobei die untere Oberfläche auf einer horizontalen Stützoberfläche liegt;
eine Benutzerplattform (346; 446; 546; 646; 746; 846), die eine untere Oberfläche und eine obere Oberfläche aufweist, worauf der Benutzer steht;
ein Stützbein (340; 440; 540; 640; 740; 840), das ein oberes Teilstück und ein unteres Teilstück aufweist, wobei entweder das obere oder das untere Teilstück des Stützbeins (340; 440; 540; 640; 740; 840) an der Basis (350; 450; 550; 650; 750; 850) befestigt ist, um axial auf der Basis (350; 450; 550; 650; 750; 850) zu schwenken, wobei die Benutzerplattform (346; 446; 546; 646; 746; 846) an einem Teilstück des Stützbeins (340; 440; 540; 640; 740; 840) schwenkbar befestigt ist, wobei die Benutzerplattform (346; 446; 546; 646; 746; 846) mit dem Stützbein (340; 440; 540; 640; 740; 840) in einer horizontalen Ebene schwenkt, die zu der horizontalen Stützoberfläche parallel ist, und die Benutzerplattform (346; 446; 546; 646; 746; 846) auf dem Stützbein (340; 440; 540; 640; 740; 840) in einer vertikalen Ebene schwenkt, die zu der horizontalen Stützoberfläche senkrecht ist;
mindestens ein Widerstandselement (237; 705; 848), das ein erstes Ende und ein zweites Ende aufweist, wobei das erste Ende an dem Stützbein (340; 440; 540; 640; 740; 840) befestigt ist und das zweite Ende an der Basis (350; 450; 550; 650; 750; 850) befestigt ist, um das Niveau des Widerstands, die Geschwindigkeit und den Schwenkwinkel der Benutzerplattform (346; 446; 546; 646; 746; 846) in der horizontalen Ebene zu steuern; und
ein Kopplungssystem (360, 362, 364, 365, 367; 453, 467, 476, 477, 479; 590, 592; 760, 764,767), das zwischen der Basis (350; 450; 550; 650; 750; 850) oder dem Stützbein (340; 440; 540; 640; 740; 840) und der Benutzerplattform (346; 446; 546; 646; 746; 846) zum Führen und Steuern des Schwenkwinkels der Benutzerplattform (346; 446; 546; 646; 746; 846) in der vertikalen und horizontalen Ebene gekoppelt ist;
wobei die Übungsvorrichtung (300; 400; 500; 600; 700; 800) so konfiguriert ist, dass bei Verwendung der Benutzer beide Füße auf die Benutzerplattform (346; 446; 546; 646; 746; 846) platziert, um sie in der horizontalen Ebene und vertikalen Ebene zu schwenken.

2. Mehrzweck-Übungsvorrichtung nach Anspruch 1, wobei das Kopplungssystem ein justierbares Kopplungssystem zum justierbaren Führen und Steuern des Schwenkwinkels der Benutzerplattform in der vertikalen und horizontalen Ebene ist.

3. Mehrzweck-Übungsvorrichtung nach Anspruch 1 oder 2, die ferner ein Skimodul zum Replizieren von Übungsbewegungen für den Benutzer für Skifahren umfasst.

4. Mehrzweck-Übungsvorrichtung nach Anspruch 3, wobei das Skimodul eine obere Oberfläche und eine untere Oberfläche aufweist, wobei die untere Oberfläche des Skimoduls an der Benutzerplattform befestigt ist, wobei das Skimodul Folgendes umfasst:
ein Paar vertikaler Stützen mit Befestigungsgliedern, die auf der oberen Oberfläche des Skimoduls befestigt sind; und
eine Fußbefestigung, die zwischen jedem Paar vertikaler Stützen schwenkbar befestigt ist;
wobei die Übungsvorrichtung so konfiguriert ist, dass bei Verwendung der Benutzer einen Fuß in jede Fußbefestigung platziert und Bewegungen durchführt, um die Fußbefestigungen und Benutzerplattform anzutreiben, um in der horizontalen Ebene und in der vertikalen Ebene zu schwenken, um dadurch die Übungsbewegungen für Skifahren zu replizieren.

5. Mehrzweck-Übungsvorrichtung nach Anspruch 4, wobei die vertikalen Stützen auf parallelen Schienen gleitbar befestigt sind, die auf der oberen Oberfläche des Skimoduls befestigt sind.

6. Mehrzweck-Übungsvorrichtung nach Anspruch 1 oder 2, die ferner ein Snowboardmodul zum Replizieren von Übungsbewegungen für den Benutzer für Snowboarding umfasst.

7. Mehrzweck-Übungsvorrichtung nach Anspruch 6, wobei das Snowboardmodul eine obere Oberfläche und eine untere Oberfläche aufweist, wobei die untere Oberfläche des Snowboardmoduls an der Benutzerplattform der Vorrichtung befestigt ist, wobei das Snowboardmodul Folgendes umfasst:
ein Paar vertikaler Stützen mit vertikalen Schwenkgliedern, die direkt an der oberen Oberfläche des Snowboardmoduls befestigt sind; und
eine einzelne planare Fußbefestigung, die zwischen dem Paar vertikaler Stützen schwenkbar gestützt wird, wobei die vertikalen Stützen an der oberen Oberfläche des Moduls befestigt sind, um der einzelnen planaren Plattform zu erlauben, in einer vertikalen Ebene zu schwenken, die zu der horizontalen Stützoberfläche senkrecht ist;
wobei die Übungsvorrichtung so konfiguriert ist, dass bei Verwendung der Benutzer auf der einzelnen planaren Fußbefestigung steht und Bewegungen durchführt, um die einzelne planare Fußbefestigung und die Benutzerplattform anzutreiben, um in der horizontalen Ebene und der vertikalen Ebene zu schwenken, um dadurch die Übungsbewegungen für Snowboarding zu replizieren.

8. Mehrzweck-Übungsvorrichtung nach Anspruch 1 oder 2, die ferner ein entfernbares Skimodul zum Replizieren von Übungsbewegungen für den Benutzer für Skifahren umfasst, wobei das entfernbare Skimodul eine obere Oberfläche und eine untere Oberfläche aufweist, wobei die untere Oberfläche des entfernbaren Skimoduls an der Benutzerplattform entfernbar befestigt ist, wobei das entfernbare Skimodul Folgendes umfasst:
ein Paar Schienen, die parallel zueinander sind, wobei jede Schiene auf der oberen Oberfläche des entfernbaren Skimoduls befestigt ist;
ein Paar vertikaler Stützen mit Befestigungsgliedern, die an jeder Schiene gleitbar befestigt sind; und
eine Fußbefestigung, die zwischen jedem Paar vertikaler Stützen auf der Schiene schwenkbar befestigt ist;
wobei die Übungsvorrichtung so konfiguriert ist, dass bei Verwendung der Benutzer einen Fuß in jede Fußbefestigung platziert und Bewegungen durchführt, a) um die Fußbefestigungen entlang der Schienen rückwärts und vorwärts anzutreiben, b) um die Fußbefestigungen und Benutzerplattform in der horizontalen Ebene anzutreiben, und c) um die Fußbefestigungen und Benutzerplattform in der vertikalen Ebene anzutreiben, um dadurch die Übungsbewegung für den Benutzer für Skifahren zu replizieren.

9. Mehrzweck-Übungsvorrichtung nach Anspruch 1 oder 2, die ferner ein entfernbares Snowboardmodul zum Replizieren von Übungsbewegungen für den Benutzer für Snowboarding umfasst, wobei das entfernbare Snowboardmodul eine obere Oberfläche und eine untere Oberfläche aufweist, wobei die untere Oberfläche des entfernbaren Snowboardmoduls an der Benutzerplattform der Vorrichtung entfernbar befestigt ist, wobei das entfernbare Snowboardmodul Folgendes umfasst:
ein Paar vertikaler Stützen mit vertikalen Schwenkgliedern, die direkt an der oberen Oberfläche des entfernbaren Snowboardmoduls befestigt sind; und
eine einzelne planare Plattform, die zwischen dem Paar vertikaler Stützen schwenkbar gestützt wird, wobei die vertikalen Stützen an der oberen Oberfläche des Moduls befestigt sind, um der einzelnen planaren Plattform zu erlauben, in einer vertikalen Ebene zu schwenken, die zu der horizontalen Stützoberfläche senkrecht ist;
wobei die Übungsvorrichtung so konfiguriert ist, dass bei Verwendung der Benutzer auf der einzelnen planaren Plattform steht und die Snowboarding-Übungsbewegungen durchführt, um die Benutzerplattform anzutreiben, um in der horizontalen Ebene und der vertikalen Ebene zu schwenken.

10. Mehrzweck-Übungsvorrichtung nach einem vorhergehenden Anspruch, die ferner mindestens ein Dämpfungselement umfasst, das ein erstes Ende und ein zweites Ende aufweist, wobei das erste Ende an dem Stützbein befestigt ist und das zweite Ende an der Basis befestigt ist, um ein Niveau der Dämpfung zu steuern, um die Geschwindigkeit und den Schwenkwinkel der Benutzerplattform in der horizontalen Ebene zu steuern.

11. Mehrzweck-Übungsvorrichtung nach Anspruch 10, die ferner mindestens ein weiteres Dämpfungselement umfasst, das ein erstes Ende und ein zweites Ende aufweist, wobei das erste Ende an der Benutzerplattform befestigt ist und das zweite Ende an der Basis oder an dem Stützbein befestigt ist, um das Niveau des Widerstands, die Geschwindigkeit und den Schwenkwinkel der Benutzerplattform in der vertikalen Ebene zu steuern.

12. Mehrzweck-Übungsvorrichtung nach einem vorhergehenden Anspruch, die ferner mindestens ein weiteres Widerstandselement umfasst, wobei ein Widerstandselement ein erstes Ende und ein zweites Ende aufweist, wobei das erste Ende an der Basis oder an dem Stützbein befestigt ist und das zweite Ende an der Benutzerplattform befestigt ist, um das Niveau des Widerstands, die Geschwindigkeit und den Schwenkwinkel der Benutzerplattform in der vertikalen Ebene zu steuern.

13. Mehrzweck-Übungsvorrichtung nach einem vorhergehenden Anspruch, wobei die Benutzerplattform in digitaler Kommunikation mit einer Rechnerverarbeitungseinheit zum Übertragen von Positions- und Bewegungsdaten an die Rechnerverarbeitungseinheit zum Verarbeiten in eine interaktive Erfahrung für den Benutzer steht.

14. Mehrzweck-Übungsvorrichtung nach einem vorhergehenden Anspruch, die dazu konfiguriert ist, als Gaming-Steuerungseinheit zu fungieren.

15. Mehrzweck-Übungsvorrichtung nach Anspruch 14, die einen oder mehrere Bewegungssensoren, Potentiometer, Beschleunigungsmesser, Dehnungsmesser, Gewichtssensoren, Drucksensoren oder andere elektronische Instrumente zum Transformieren von Bewegungen in elektronische Signale zur Verwendung bei der Gaming-Steuerung umfasst.

## Revendications

1. Dispositif d'exercice physique polyvalent (300 ; 400 ; 500 ; 600 ; 700 ; 800) destiné à répliquer des mouvements d'exercice physique pour un utilisateur pour une pluralité de sports et une thérapie physique comprenant :
une base (350 ; 450 ; 550 ; 650 ; 750 ; 850) ayant une surface supérieure et une surface inférieure, la surface inférieure reposant sur une surface de support horizontale ;
une plateforme pour utilisateur (346 ; 446 ; 546 ; 646 ; 746 ; 846) ayant une surface inférieure et une surface supérieure sur laquelle l'utilisateur se tient debout ;
un montant de support (340 ; 440 ; 540 ; 640 ; 740 ; 840) ayant une section supérieure et une section inférieure, l'une ou l'autre de la section supérieure ou de la section inférieure du montant de support (340 ; 440 ; 540 ; 640 ; 740 ; 840) étant montée sur la base (350 ; 450 ; 550 ; 650 ; 750 ; 850) pour pivoter axialement sur la base (350 ; 450 ; 550 ; 650 ; 750 ; 850), la plateforme pour utilisateur (346 ; 446 ; 546 ; 646 ; 746 ; 846) étant montée pivotante sur une section du montant de support (340 ; 440 ; 540 ; 640 ; 740 ; 840), dans lequel la plateforme pour utilisateur (346 ; 446 ; 546 ; 646 ; 746 ; 846) pivote avec le montant de support (340 ; 440 ; 540 ; 640 ; 740 ; 840) dans un plan horizontal parallèle à la surface de support horizontale, la plateforme pour utilisateur (346 ; 446 ; 546 ; 646 ; 746 ; 846) pivote sur le montant de support (340 ; 440 ; 540 ; 640 ; 740 ; 840) dans un plan vertical perpendiculaire à la surface de support horizontale ;
au moins un élément de résistance (237 ; 705 ; 848) ayant une première extrémité et une deuxième extrémité, la première extrémité étant montée sur le montant de support (340 ; 440 ; 540 ; 640 ; 740 ; 840) et la deuxième extrémité étant montée sur la base (350 ; 450 ; 550 ; 650 ; 750 ; 850) pour commander le niveau de résistance, la vitesse, et l'angle de pivotement de la plateforme pour utilisateur (346 ; 446 ; 546 ; 646 ; 746 ; 846) dans le plan horizontal ; et
un système à bielle (360, 362, 364, 365, 367 ; 453, 467, 476, 477, 479 ; 590, 592 ; 760, 764, 767) relié entre la base (350 ; 450 ; 550 ; 650 ; 750 ; 850) ou le montant de support (340 ; 440 ; 540 ; 640 ; 740 ; 840) et la plateforme pour utilisateur (346 ; 446 ; 546 ; 646 ; 746 ; 846) destiné à guider et commander l'angle du pivotement de la plateforme pour utilisateur (346 ; 446 ; 546 ; 646 ; 746 ; 846) dans les plans vertical et horizontal ;
dans lequel le dispositif d'exercice physique (300 ; 400 ; 500 ; 600 ; 700 ; 800) est configuré de telle sorte qu'en utilisation, l'utilisateur place les deux pieds sur la plateforme pour utilisateur (346 ; 446 ; 546 ; 646 ; 746 ; 846) pour pivoter dans le plan horizontal et le plan vertical.

2. Dispositif d'exercice physique polyvalent selon la revendication 1, dans lequel le système à bielle est un système à bielle réglable destiné à guider et commander de manière réglable l'angle du pivotement de la plateforme pour utilisateur dans les plans vertical et horizontal.

3. Dispositif d'exercice physique polyvalent selon la revendication 1 ou 2, comprenant en outre un module de ski destiné à répliquer des mouvements d'exercice physique pour permettre à l'utilisateur de skier.

4. Dispositif d'exercice physique polyvalent selon la revendication 3, dans lequel le module de ski a une surface supérieure et une surface inférieure, la surface inférieure du module de ski étant montée sur la plateforme pour utilisateur, le module de ski comprenant :
une paire de supports verticaux avec des organes de montage montés sur la surface supérieure du module de ski ; et
un montage pour pied monté pivotant entre chaque paire de supports verticaux ;
dans lequel le dispositif d'exercice physique est configuré de telle sorte qu'en utilisation, l'utilisateur place un pied dans chaque montage pour pied et réalise des mouvements pour propulser les montages pour pied et la plateforme pour utilisateur pour pivoter dans le plan horizontal et dans le plan vertical pour ainsi répliquer les mouvements d'exercice physique destinés à skier.

5. Dispositif d'exercice physique polyvalent selon la revendication 4, dans lequel les supports verticaux sont montés coulissants sur des rails parallèles qui sont montés sur la surface supérieure du module de ski.

6. Dispositif d'exercice physique polyvalent selon la revendication 1 ou 2, comprenant en outre un module de snowboard destiné à répliquer des mouvements d'exercice physique pour permettre à l'utilisateur de faire du snowboard.

7. Dispositif d'exercice physique polyvalent selon la revendication 6, dans lequel le module de snowboard a une surface supérieure et une surface inférieure, la surface inférieure du module de snowboard étant montée sur la plateforme pour utilisateur du dispositif, le module de snowboard comprenant :
une paire de supports verticaux avec des pivots verticaux montés directement sur la surface supérieure du module de snowboard ; et
un montage pour pied plan unique supporté pivotant entre la paire de supports verticaux avec les supports verticaux montés sur la surface supérieure du module pour permettre à la plateforme plane unique de pivoter dans un plan vertical perpendiculaire à la surface de support horizontale ;
dans lequel le dispositif d'exercice physique est configuré de telle sorte qu'en utilisation, l'utilisateur se tient debout sur le montage pour pied plan unique et réalise des mouvements pour propulser le montage pour pied plan unique et la plateforme pour utilisateur pour pivoter dans le plan horizontal et le plan vertical pour ainsi répliquer les mouvements d'exercice physique destinés à faire du snowboard.

8. Dispositif d'exercice physique polyvalent selon la revendication 1 ou 2, comprenant en outre un module de ski amovible destiné à répliquer des mouvements d'exercice physique pour permettre à l'utilisateur de skier, le module de ski amovible ayant une surface supérieure et une surface inférieure, la surface inférieure du module de ski amovible étant montée amovible sur la plateforme pour utilisateur, le module de ski amovible comprenant :
une paire de rails parallèles l'un à l'autre, chaque rail étant monté sur la surface supérieure du module de ski amovible ;
une paire de supports verticaux avec des organes de montage montés coulissants sur chaque rail ; et
un montage pour pied monté pivotant entre chaque paire de supports verticaux sur le rail ;
dans lequel le dispositif d'exercice physique est configuré de telle sorte qu'en utilisation, l'utilisateur place un pied dans chaque montage pour pied et réalise des mouvements a) pour propulser les montages pour pied vers l'arrière et vers l'avant le long des rails, b) pour propulser les montages pour pied et la plateforme pour utilisateur pour pivoter dans le plan horizontal, et c) pour propulser les montages pour pied et la plateforme pour utilisateur pour pivoter dans le plan vertical pour ainsi répliquer les mouvements d'exercice physique pour permettre à l'utilisateur de skier.

9. Dispositif d'exercice physique polyvalent selon la revendication 1 ou 2, comprenant en outre un module de snowboard amovible destiné à répliquer des mouvements d'exercice physique pour permettre à l'utilisateur de faire du snowboard, le module de snowboard amovible ayant une surface supérieure et une surface inférieure, la surface inférieure du module de snowboard amovible étant montée amovible sur la plateforme pour utilisateur du dispositif, le module de snowboard amovible comprenant :
une paire de supports verticaux avec des pivots verticaux montés directement sur la surface supérieure du module de snowboard amovible ; et
une plateforme plane unique supportée pivotante entre la paire de supports verticaux avec les supports verticaux montés sur la surface supérieure du module pour permettre à la plateforme plane unique de pivoter dans un plan vertical perpendiculaire à la surface de support horizontale ;
dans lequel le dispositif d'exercice physique est configuré de telle sorte qu'en utilisation, l'utilisateur se tient debout sur la plateforme plane unique et réalise les mouvements d'exercice physique de snowboard pour propulser la plateforme pour utilisateur pour pivoter dans le plan horizontal et le plan vertical.

10. Dispositif d'exercice physique polyvalent selon l'une quelconque des revendications précédentes, comprenant en outre au moins un élément d'amortissement ayant une première extrémité et une deuxième extrémité, la première extrémité étant montée sur le montant de support et la deuxième extrémité étant montée sur la base pour commander un niveau d'amortissement pour commander la vitesse et l'angle de pivotement de la plateforme pour utilisateur dans le plan horizontal.

11. Dispositif d'exercice physique polyvalent selon la revendication 10, comprenant en outre au moins un autre élément d'amortissement ayant une première extrémité et une deuxième extrémité, la première extrémité étant montée sur la plateforme pour utilisateur et la deuxième extrémité étant montée sur la base ou sur le montant de support pour commander le niveau de résistance, la vitesse et l'angle de pivotement de la plateforme pour utilisateur dans le plan vertical.

12. Dispositif d'exercice physique polyvalent selon l'une quelconque des revendications précédentes, comprenant en outre au moins un autre élément de résistance un élément de résistance ayant une première extrémité et une deuxième extrémité, la première extrémité étant montée sur la base ou sur le montant de support et la deuxième extrémité étant montée sur la plateforme pour utilisateur pour commander le niveau de résistance, la vitesse et l'angle de pivotement de la plateforme pour utilisateur dans le plan vertical.

13. Dispositif d'exercice physique polyvalent selon l'une quelconque des revendications précédentes, dans lequel la plateforme pour utilisateur est en communication numérique avec une unité de traitement informatique afin de transmettre des données de position et de mouvement à l'unité de traitement informatique pour un traitement en une expérience interactive pour l'utilisateur.

14. Dispositif d'exercice physique polyvalent selon l'une quelconque des revendications précédentes, configuré pour agir comme un dispositif de commande de jeu.

15. Dispositif d'exercice physique polyvalent selon la revendication 14, comprenant un ou plusieurs capteurs de mouvement, potentiomètres, accéléromètres, tensiomètres, capteurs de poids, capteurs de pression, ou autres instruments électroniques, destinés à transformer des déplacements en signaux électroniques à utiliser dans une commande de jeu.
